# EUROPÄISCHE PATENTSCHRIFT

(11) **EP 1 673 832 B1**
(45) Veröffentlichungstag und Bekanntmachung des Hinweises auf die Patenterteilung: **17.02.2010**
(21) Anmeldenummer: 04769096.1
(22) Anmeldetag: 27.05.2004
(51) Int. Cl.: H01M 8/02, H01M 4/86, B01J 8/00

(54) **SCHICHTSTRUKTUREN UND VERFAHREN ZU DEREN HERSTELLUNG**
MULTILAYERED STRUCTURES AND METHODS FOR PRODUCING THE SAME
STRUCTURES A COUCHES MULTIPLES ET LEURS PROCEDES DE FABRICATION

(30) Priorität: 27.05.2003 WO PCT/IB03/03679
(43) Veröffentlichungstag der Anmeldung: 28.06.2006
(73) Patentinhaber: Häring, Thomas, 70619 Stuttgart (DE)
(72) Erfinder: Häring, Thomas, 70619 Stuttgart (DE)
(86) Internationale Anmeldenummer: PCT/IB2004/002339
(87) Internationale Veröffentlichungsnummer: WO 2004/110599

(56) Entgegenhaltungen:
- GB-A- 1 038 852
- US-A- 5 395 705
- US-B1- 6 444 602
- US-B1- 6 524 736

## Beschreibung

### Zusammenfassung

Die Erfindung betrifft Verfahren zur Herstellung von Membranen. Weiterhin betrifft die die Erfindung Verfahren zur Herstellung von Membranelektrodeneinheiten und Membranen, die nach diesen Verfahren hergestellt wurden. Die Erfindungsgemäßen Membranen und Membranelektrodeneinheiten können verwendet werden zur Gewinnung von Energie auf elektrochemischem oder photochemischem Weg, insbesondere in Membranbrennstoffzellen (H₂-oder Direktmethanol-Brennstoffzellen) bei Temperaturen von -20 bis +180°C. In einer Ausführungsform sind Arbeitstemperaturen bis zu 250°C möglich. Die erfindungsgemäßen Membranen und Membranelektrodeneinheiten können verwendet werden in Membranverfahren. Insbesondere in galvanischen Zellen, in sekundären Batterien, in Elektrolysezellen, in Membrantrennprozessen wie Gastrennung, Pervaporation, Perstraktion, Umkehrosmose, Elektrodialyse, Diffusionsdialyse und bei der Trennung von Alken-Alkan-Gemischen bzw. bei der Trennung von Gemischen, in der eine Komponente mit Silberionen Komplexe bildet.

### Stand der Technik und Aufgabenbeschreibung

Die Herstellung von Polymerelektrolyt-Membranbrennstoffzellen (PEM) geht aus von einer zentralen Membran, die mit einer katalytischen Schicht auf beiden Seiten in Verbindung gebracht wird. Auf die Schichten werden wiederum erneut elektronenleitende Materialien, wie Kohlenstoffliese oder ähnliches aufgebracht. Eine Polymerelektrolyt-Membranbrennstoffzelle hat einen Schichtaufbau, wobei jede Schicht ihre spezifischen Aufgaben zu erfüllen hat. Diese Aufgaben sind zum Teil entgegengesetzt. So muß die Membran eine sehr hohe Ionenleitfähigkeit besitzen, sollte aber keine oder nur sehr geringe Elektronenleitfähigkeit haben und vollkommen gasdicht sein. In der Gasdiffusionsschicht ist es genau umgekehrt hier ist eine sehr hohe Gasdurchlässigkeit bei großer Elektronenleitfähigkeit erwünscht. Da die unterschiedlichen Aufgaben, die jede einzelne Schicht zu erfüllen hat nur durch unterschiedliche Materialien zu erfüllen sind, entsteht oftmals das Problem der Unverträglichkeit dieser Materialien. Mal sind sie hydrophob und wenige µ weiter, über den Querschnitt betrachtet, wieder hydrophil. Einen dünnen Verbund mit den Materialien zu schaffen ist daher ein gängiges Problem in der Technik und führt dazu das der Wirkungsgrad nicht optimal ist. Die Membranen müssen eine bestimmte Mindestdicke haben, sonst lassen sie sich nicht technisch verarbeiten. So läßt sich eine Membran, die nur wenige µ Dicke besitzt, nur sehr schwer mit einem Katalysator enthaltenden Pulver verpressen, ohne dass dabei die Membran durchgepreßt wird. Es ist daher Aufgabe Verfahren zur Darstellung von Schichtstrukturen bereit zu stellen und Verfahren, die eine verbesserte Anbindung der Schichten untereinander gewährleisten. Weiterhin ist es Aufgabe Materialien und Materialkombinationen zur Verfügung zu stellen, die die Herstellung nach den erfindungsgemäßen Verfahren erleichtern bzw. zum Teil sogar erst ermöglichen.

### Erfindungsbeschreibung

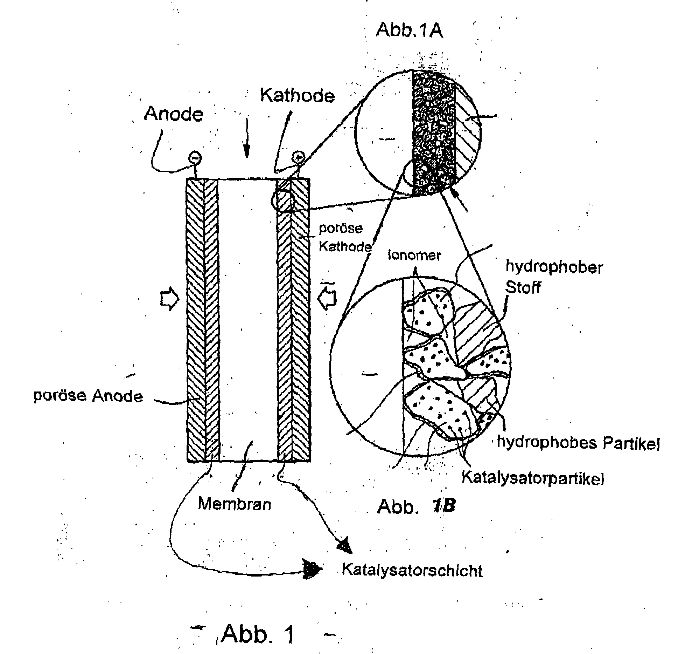

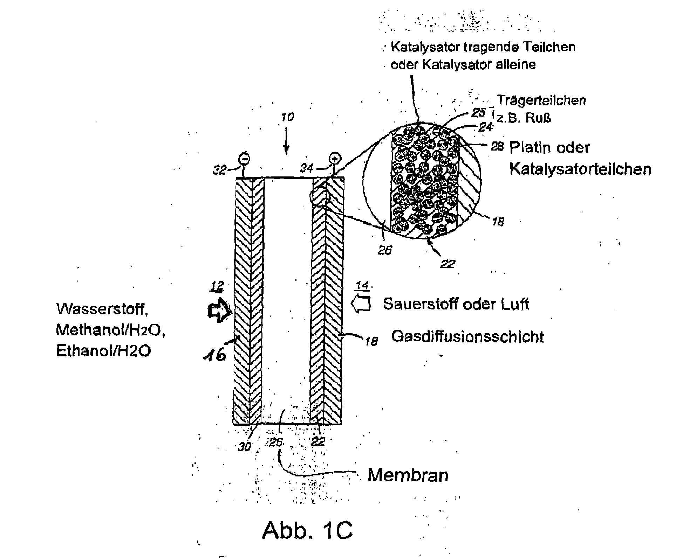

Diese Aufgabe wird gelöst durch zwei Teilerfindungen, die dafür notwendig sind. Schematisch ist eine Polymerelektrolyt-Membranbrennstoffzelle (siehe Abb.1) von Links (Anode) nach Rechts (Kathode) aufgebaut aus einer porösen Schicht, die gegebenenfalls noch eine Stützfunktion hat und meistens einen geringen elektrischen Widerstand hat, manchmal gefolgt von weiteren porösen Schichten oft sind es Fliese, ebenfalls mit geringem elektrischem Widerstand und je nach Anwendung und Hersteller enthalten diese katalytisch aktive Substanzen. Dieser Schicht folgt dann eine mehr oder weniger dicke Elektrolytschicht, z.B. eine Polymermembran, die ionenleitend ist und auch oft mit katalytisch aktiven Substanzen beschichtet ist. Auf der anderen Seite (Kathode) der Membran schließt sich wieder eine katalytische Schicht, gefolgt von porösen Strukturen an.
Im ersten Teil der Erfindung findet der Aufbau der Schichtstruktur nicht ausgehend von einer Membran statt, also von Innen nach Außen; sondern von Außen (Kathode oder Anode) über Innen (Membran) nach Außen (Anode oder Kathode).
Das erfindungsgemäße Verfahren ist gekennzeichnet durch eine poröse Grundstruktur bzw. ein poröses Substrat (Sub1) auf die eine oder mehren dünne Schichten (Sch1) oder Lagen, die in einer besonderen Ausführungsform katalytisch aktive Substanzen enthalten, aufgetragen werden.
Auf diese Schicht folgt die selektive Trennschicht (Memb), darauf gegebenfalls wieder dünne Schichten (Sch2) und abschließend ein poröses Substrat (Sub2).

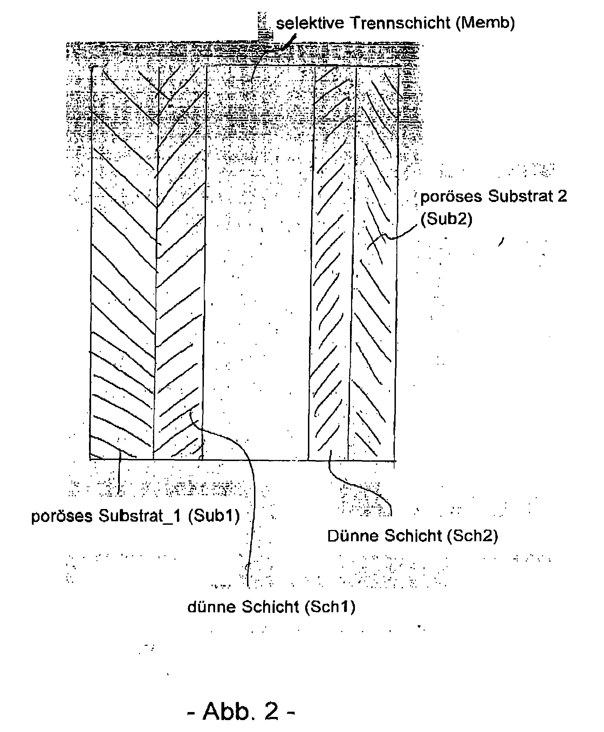

Die Erfindung ermöglicht die Herstellung von Einheiten die gekennzeichnet sind durch folgenden Schichtaufbau (Abb.2):
poröses_Substrat_1--selektive_Trennschicht(en)---poröses_Substrat_2
ausgehend von einem porösen Substrat_1. Hierbei werden in einer bevorzugten Ausführungsform die Schichten nacheinander aus poröser Elektrodenschicht, gefolgt von einer weitestgehend dichten ionenleitenden Elektrolytschicht, die wiederum von einer porösen Elektrodenschicht bedeckt ist, aufgebaut.

Die Erfindung ermöglicht die Herstellung von Elektrode-Elektrolyt-Elektroden-Einheiten im Schichtaufbau auf einem porösen Substrat mit bevorzugt einer einzigen Herstellmethode. Hierbei werden die Funktionsschichten nacheinander aus poröser Elektrodenschicht, gefolgt von einer dichten Elektrolytschicht, die wiederum von einer porösen Elektrodenschicht bedeckt ist, aufgebaut. Die gesamte Herstellung der Schichtstrukturen, insbesondere, des galvanischen Elementes kann in einer einzigen Produktionsstraße, mit nur einer Herstellungsmethode, erfolgen. Die Fertigung ist somit erheblich einfacher, zeitsparender und kostengünstiger.

Dabei kann die dichte Elektrolytschicht folgenden Typs sein:
- ein festes Ionomer oder ein fester, homogener, mikro- oder makroheterogener Ionomerblend oder ein homogenes, mikro- oder makroheterogenes Ionomer-(Block)copolymer
- ein Ionomer, bestehend aus einer porösen Trägerstruktur, die mit einem festen oder einem flüssigen Ionomer/Polyelektrolyten oder Ionomerblend oder Ionomer(block)copolymer gefüllt ist.
- ein Ionomer, bestehend aus einer porösen Trägerstruktur, die mit einem flüssigen Polyelektrolyten (kann auch eine Heteropolysäure sein) gefüllt ist, wobei der Komposit an beiden Seiten mit einer dünnen festen, protonenleitenden (Polymer)-Schicht bedeckt ist, die eine Ausdiffusion des flüssigen Polyelektrolyten verhindert.

Die einzelnen Schichten werden aus Dispersionen und/oder Lösungen mit den speziellen gewünschten funktionellen Eigenschaften hergestellt. Als Fertigungstechniken dienen Sprüh- und Druckverfahren (z.B. Siebdruck, Hochdruck, Tiefdruck, Tampondruck, Tintenstrahldruck, Schablonendruck, Lithographie. Eine besondere Ausführungsform stellt die Fertigung gradierter Schichten mit fließenden Übergängen insbesondere der funktionellen Eigenschaften dar.
In dieser Ausführungsform kann eine Einheit als Brennstoffzelle, insbesondere als Polymerelektrolytmembranbrennstoffzelle verwendet werden. Der schichtweise nacheinander ablaufende Aufbau von einer Elektrode zur anderen ermöglicht durch die verwendeten Verfahren sehr dünne Schichten. Die einzelnen Einheiten lassen sich miniaturisieren und nebeneinander auf dem gleichen Substrat anordnen. Das Substrat, bevorzugt ist ein flächiges Gebilde kann für sich genommen wieder unterschiedliche Eigenschaften über die Fläche besitzen. Die über den Schichtaufbau gebildeten Einheiten können, im Falle der galvanischen Einheit, seriell und/oder parallel verschaltet werden. Die Verschaltung geschieht schon während des Herstellungsprozeßes. Es ist mit den vorgestellten Verfahren auch möglich die Elektroden durch die Membran hindurch zu verschalten. Die enstehenden Brennstoffzellenelemente können sowohl horizontal als auch vertikal verschaltet werden. Die entstehenden Einheiten können unterschiedlich groß sein. Es können große wie kleine Einheiten auf der gleichen Substratoberfläche nebeneinander hergestellt werden. Dies kann verwendet werden um gezielt einzelne Zellen zu einer gewünschten Gesamtspannung zusammen zu schalten.

Weitere Vorteile ergeben sich dadurch, dass die Elemente modular aufgebaut werden können und dass durch Verschaltung von einzelnen Elementen beliebige Leistungen erzielt werden können.
Die Fertigung von Brennstoffzelleneinheiten mit höherer Spannung bzw. höheren Stromdichten wird durch das erfindungsgemäße Herstellungsverfahren erheblich vereinfacht; da die einzelnen Zellen direkt bei der Herstellung seriell oder parallel in der Ebene verschaltet werden können.
Die Leistung des galvanischen Elementes kann so auf einfache Art und Weise an die jeweilige Anwendung angepasst werden.
So ist durch die Verschaltung der Einzelzellen über die Fläche z.B. keine aufwendige Regelelektronik mehr von Nöten. Durch diese Verfahren ist es möglich Brennstoffzellen über die Fläche so zu verschalten, daß auf der Fläche eines DIN A4-Blattes (21 × 29,5 cm)(plus/minus 10%) eine Spannung von 6-500 Volt, bevorzugt sind 12-240 Volt und besonders bevorzugt sind der Bereich von 10 bis 15 Volt, der Bereich von 110 bis 130 Volt und der Bereich von 220 bis 240 Volt Gleichstrom erreicht werden kann. Dabei wird keinerlei Elektronik verwendet. Für die Anwendung beim Verbraucher ist nur noch eine Begrenzerschaltung mit einem Wechselrichter notwendig. Die Flächen z.B. in der Größe der DIN-A4-Blätter lassen sich selbst wieder als Stack anordnen. Dieser Aufbau hat den Vorteil, dass sollte eine Fläche, z.B. 12 Volt auf einer Seite ausfallen, fällt nicht der gesamte Stack aus. Die Leistung des Stacks mindert sich um die ausgefallene Fläche, die Spannung bleibt aber ohne Regelaufwand konstant. Eine einfach Reparatur des Systems ist dadurch ebenfalls möglich.

Ein weiterer Vorteil der Erfindung ist die Herstellung von gradierten Schichten. Durch sie können die funktionellen Eigenschaften besser angepaßt und aufeinander abgestimmt werden.

Das Trägersubstratkonzept hat den Vorteil, dass die aktiven Schichten keine mechanisch tragende Funktion ausüben müssen. Die mechanischen und funktionellen chemischen bzw. elektronischen Eigenschaften können voneinander entkoppelt werden.
Dadurch stehen eine Vielzahl weiterer Funktionsmaterialien zur Verfügung, die sonst wegen ungenügender mechanischer Eigenschaften nicht eingesetzt werden können.
Sowohl der schichtweise Aufbau der galvanischen Elemente als auch das Trägersubstratkonzept eröffnen die Möglichkeit einer erheblichen Material- und Gewichtseinsparung.

Die Erfindung erlaubt die Fertigung galvanischer Elemente mit flexibler Formgebung und erheblicher Raumeinsparung.

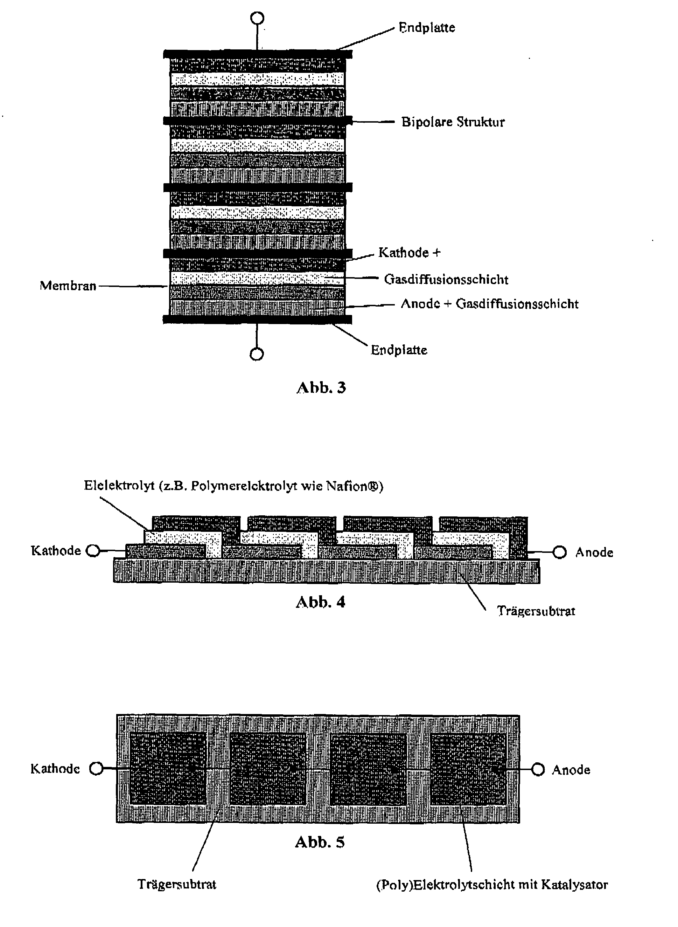

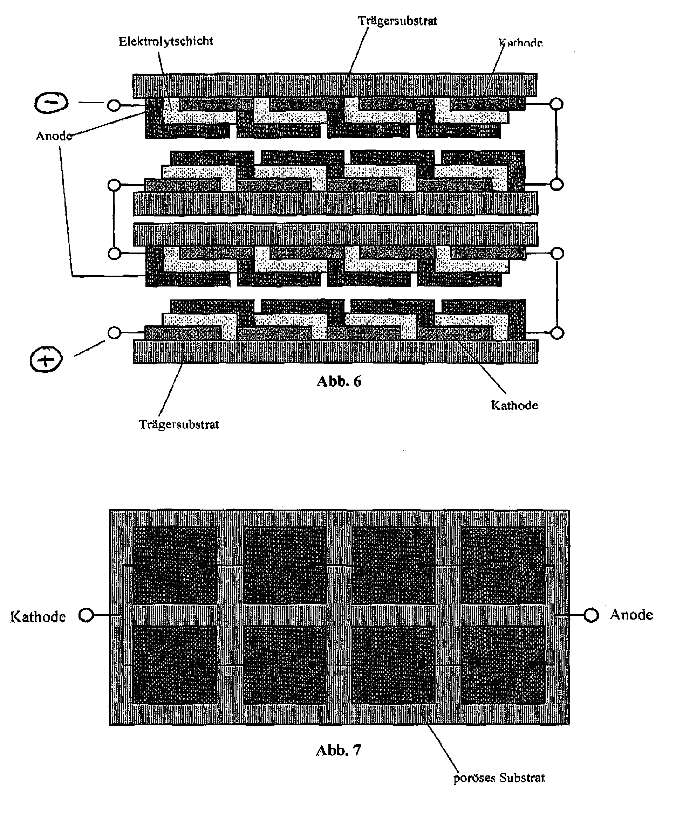

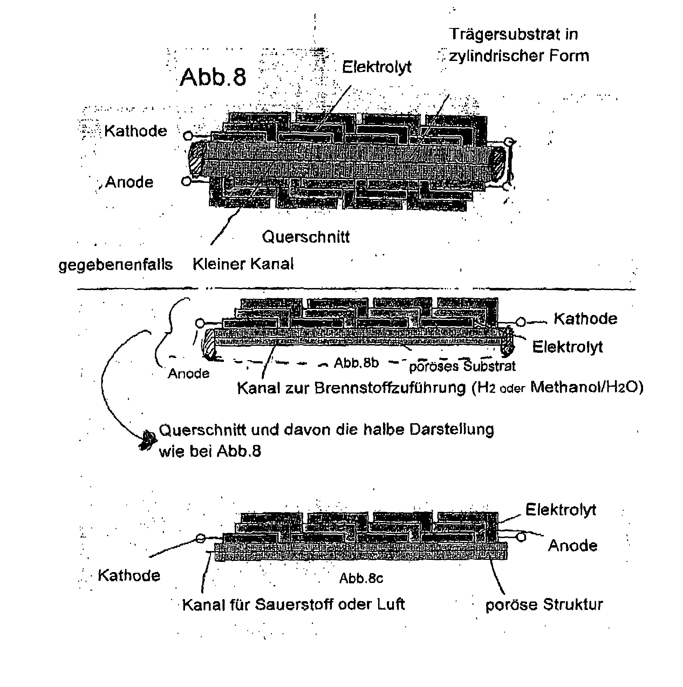

Ein besonderer Vorteil der Erfindung besteht darin, dass die galvanischen Elemente mit einfachem Aufbau bei einfachen Betriebsbedingungen, insbesondere Umgebungsbedingungen, und ohne Druckverluste betrieben werden können. Eine Ausführung in diesem Sinne stellt beispielsweise eine Brennstoffzelleneinheit aus einer oder mehreren Zellen mit einem Aufbau gemäß Abb. 4 dar, deren Kathoden sich auf dem Trägersubstrat und deren Anoden sich oberhalb der Elektrolytschichten befinden. Eine derartige Brennstoffzelleneinheit kann auf einfache Art und Weise ohne zusätzliche Komponenten bei Umgebungsdruck und Umgebungstemperatur betrieben werden, wenn die Einheit so in ein Gehäuse eingebaut wird, dass sich direkt über der Anode ein Brennstoffraum befindet und sich die Kathode selbstatmend mit Luft durch das Trägersubstrat versorgt. Als Brennstoff kann beispielsweise Wasserstoff, Methanol und/oder Ethanol verwendet werden.
In einer Ausführungsform werden die flächigen verschalteten Zellen wie z.B. in Abb. 4, 5 oder 7 gewickelt, zylindrisch und/oder um einen zylindrischen Körper angeordnet.

Das Trägersubstrat besitzt vorzugsweise folgende Eigenschaften: eine offene Porösität, die den Durchtritt eines Gases oder eines Brennstoffes in einer für eine für Anwendung notwendigem Mindestmaß erlaubt. Die Porösität liegte im Bereich 20 bis 80 Vol.%, besonders bevorzugt sind 50 bis 75%. Über die Porösität kann die Medienzufuhr, insbesondere die Brennstoffzufuhr oder auch die Gaszufuhr eingestellt werden. Bei einer zylindrischen Anordnung des porösen Substrates mit einem zentralen Versorgungskanal genügt auch schon eine Porösität unter 60 Vol.%. Je nach Zellaufbau kann die poröse Struktur elektronische Leitfähigkeit oder keine Leitfähigkeit haben. Das Trägersubstrat hat bevorzugt trotz seiner Porösität eine möglichst glatte Oberfläche, hat bevorzugt eine chemische Stabilität insbesondere gegenüber den Verbindungen, die beim Herstellungsprozeß und/oder im späteren Anwendungsfall der Applikation auftreten, dies sind insbesondere Säuren, Laugen und organischen Lösungsmitteln. Die thermische Beständigkeit des Trägersubstrates liegt im Bereich von -40°C bis 300°C, bevorzugt bis 200°C. Bevorzugt hat es eine hohe mechanische Stabilität, insbesondere mit einer Biegesteifigkeit von größer als 35 MPa und einem Elastizitätsmodul von größer als 9000 Mpa.
Die funktionalen Eigenschaften der Schichten können durch Zugabe geeigneter Stoffe in die Dispersionen oder Lösungen gezielt angepaßt werden. Dazu zählen insbesondere Porenbildner zur Erhöhung der Porosität, hydrophobe oder hydrophile Zusätze zur Variation des Benetzungsverhaltens (z.B. Teflon und/ oder sulfonierte und/oder Stickstoff enthaltende Polymere), Stoffe zur Erhöhung der elektrischen Leitfähigkeit, insbesondere Ruß, Graphit und oder elektrisch leitende Polymere, wie Polyanilin und/oder Polythiophen und Abkömmlinge der Polymere oder Zusätze zur Erhöhung der ionischen Leitfähigkeit (z.B. sulfonierte Polymere). Außerdem zugesetzt werden können geträgerte oder ungeträgerte Katalysatoren, insbesondere platinhaltige Metalle. Als Trägersubstanzen sind besonders bevorzugt Ruß und Graphit. Eine weitere Ausführungsform beinhaltet die Zugabe einer Kombination von verschiedenen Polymeren sowohl zum Trägersubstrat, als auch zu den Lösungen und/oder Dispersionen, die für den Aufbau der auf das Trägersubstrat aufgebrachten Schichten verwendet werden.

Die in der vorliegenden Erfindung verwendeten Polymere weisen wiederkehrende Einheiten der allgemeinen Formel (1)

-Q-R- , (1)

worin Q eine Bindung, Sauerstoff, Schwefel 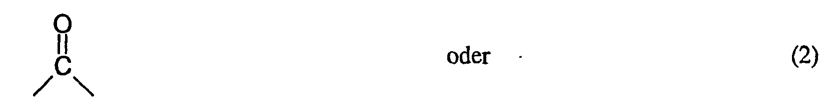 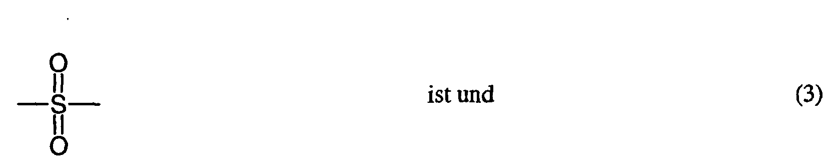 der Rest R ein zweiwertiger Rest einer aromatischen oder heteroaromatischen oder aliphatische Verbindung ist, auf.

Darüber hinaus betrifft die vorliegende Erfindung Polymere mit Fluor in der Hauptkette, wie Polyvinylidendifluorid (PVDF), Poly(vinylfluorid) (PVF) und Polychlorotrifluorethylene und Analoga, wie Kel-F® und Neoflon®. Die verwendeten Polymere werden zugänglich durch einen oder mehrere Modifikationsschritte der Ausgangspolymere der allgemeinen Formel (1).
Polymere der allgemeinen Formel (1) sind bereits bekannt. Diese sind Polyarylene, wie Polyphenylen und Polypyren, aromatische Polyvinylverbindungen, wie Polystyrol und Polyvinylpyridin, Polyphenylenvinylen, aromatische Polyether, wie Polyphenylenoxid, aromatische Thioether, wie Polyphenylensulfid, Polysulfone, wie ®Radel R und Ultrason®, und Polyetherketone, wie PEK, PEEK, PEKK und PEKEKK.
Die verwendeten Polymere weisen wiederkehrende Einheiten der allgemeinen Formel (1) auf, welche sich dadurch auszeichnen, dass der Rest R zumindest teilweise Substituenten der allgemeinen Formel mit den funktionellen Gruppen (2A) bis (2R) und/oder (3A) bis (3J) und/oder den Vernetzungsbrücken (4A) bis (4C) aufweist, 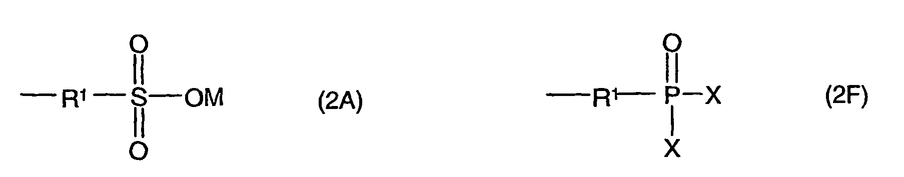 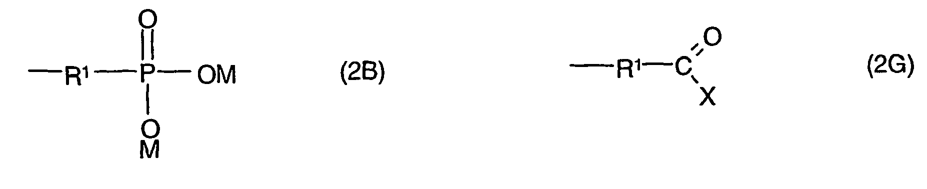 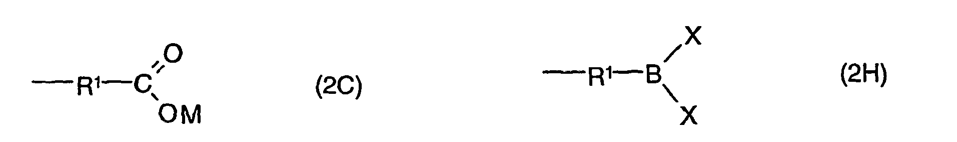 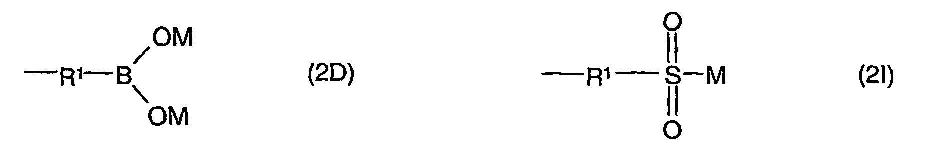 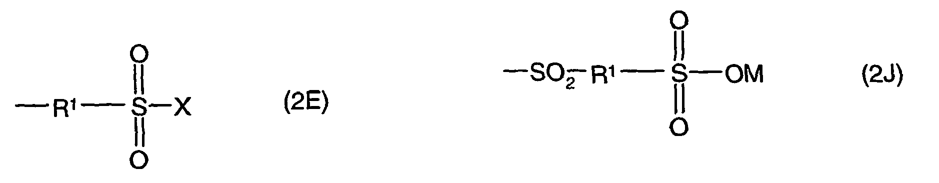 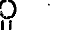 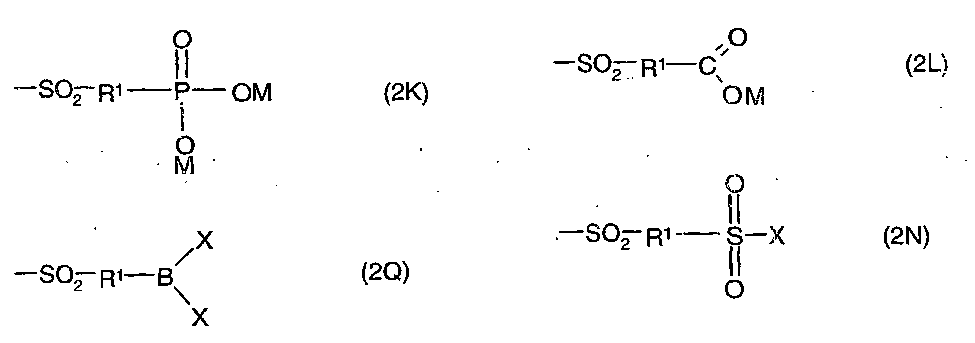 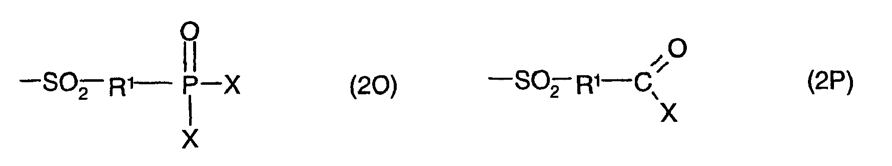 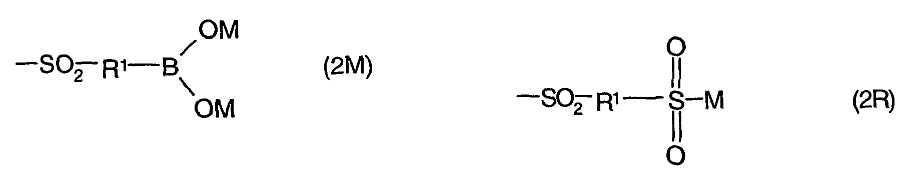 wobei die Reste R¹ unabhängig voneinander eine Bindung oder eine 1 bis 40 Kohlenstoffatome aufweisende Gruppe, vorzugsweise eine verzweigte oder nicht verzweigte Alkyl-, Cycloalkyl- oder eine gegebenenfalls alkylierte Aryl- oder Heteroarylaruppe ist, die fluoriert oder teilfluoriert sein kann, wobei mindestens zwei der Reste R2, R3 und R4 zu einem gegebenenfalls aromatischen Ring geschlossen sein können,wobei M unabhängig voneinander Wasserstoff, ein ein- oder mehrwertiges Kation, vorzugsweise Li+, Na+, K+, Rb+, Cs+, TiO2+, ZrO2+, Ti4+, Zr4+, Ca2+, Mg2+ oder ein gegebenenfalls alkyliertes Ammoniumion ist und X ein Halogen oder eine gegebenenfalls substiuierte, insbesondere alkylierte Aminogruppe ist, 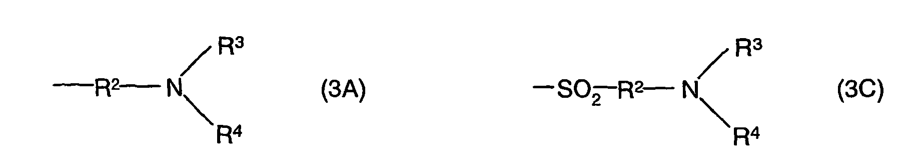 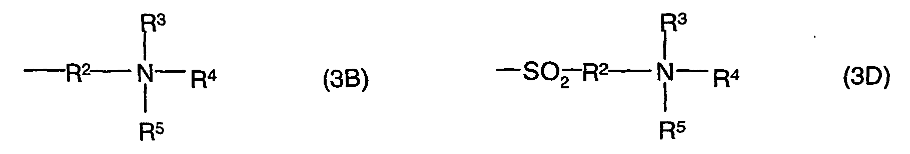 worin R², R³, R⁴, R⁵ unabhängig voneinander (2A), (2B), (2C), (2D), (2E), (2F); (2G), (2H), (2I), (2J), (2K), (2L), (2M), (2N), (20), (2P), (2Q) und/oder (2R) oder eine 1 bis 40 Kohlenstoffatome aufweisende Gruppe, vorzugsweise eine verzweigte oder nicht verzweigte Alkyl-, Cycloalkyl- oder eine gegebenenfalls alkylierte Arylgruppe sind, die fluoriert oder teilfluoriert sein können, wobei mindestens zwei der Reste R², R³ und R⁴ zu einem gegebenfalls aromatischen Ring geschlossen sein können, und/oder der Rest R zumindest teilweise eine Gruppe der allgemeinen Formel (3E), (3F), (3G), (3I), (3J) und/oder (3H) ist, 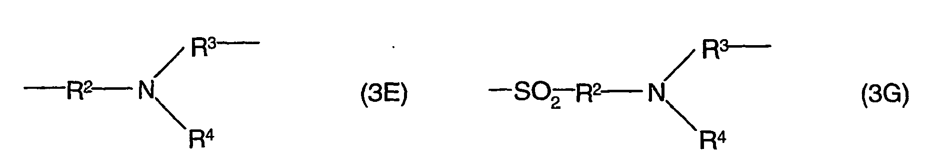 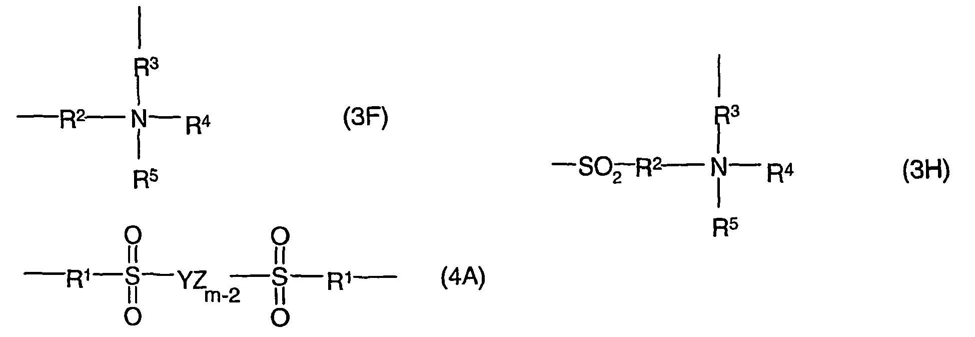 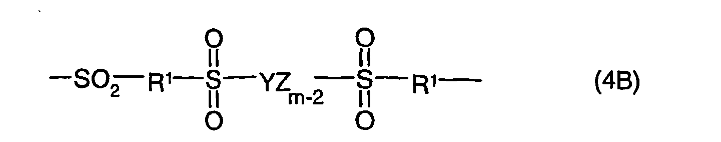 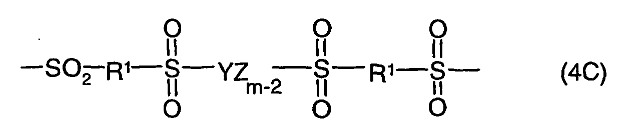 die mindestens zwei Reste R miteinander verbinden,
wobei Y eine 1 bis 40 Kohlenstoffatome aufweisende Gruppe, vorzugsweise eine verzweigte oder nicht verzweigte Alkyl-, Cycloalkyl- oder gegebenenfalls alkylierte Arylgruppe ist, die fluoriert oder teilfluoriert sein kann, Z ist Hydroxyl, eine Gruppe der allgemeinen Formel (5) 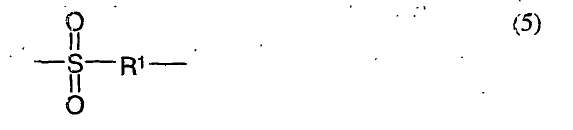 oder eine Gruppe mit einem Moleklargewicht größer oder gleich 14 g/mol bestehend aus den optionalen Komponenten (3E), (3F), (3G), (3H), (3I), (3J), (2A), (2B), (2C), (2D), (2E), (2F), (2G), (2H), (2I), (2J), (2K), (2L), (2M), (2N), (20), (2P), (2Q), (2R), H, C, O, N, S, P, Halogenatomen, ein- oder mehrwertiges Metallkation ist und m eine ganze Zahl größer gleich 2 ist.

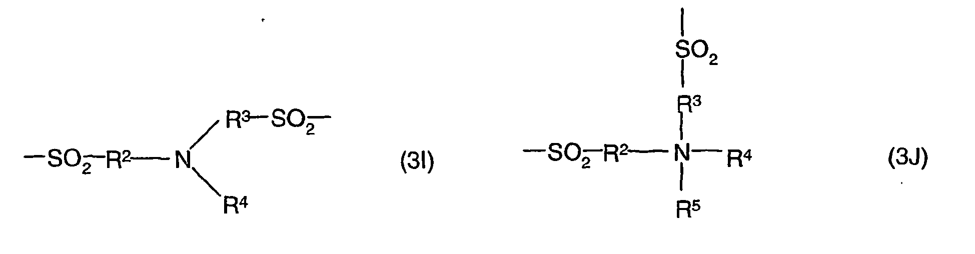

Die verwendeten Polymere weisen wiederkehrende Einheiten der allgemeinen Formel (1), insbesondere wiederkehrende Einheiten entsprechend den allgemeinen Formeln (1A), (1B), (1C), (1D), (1E), (1F), (1G), (1H), (1I), (1T), (1K), (1L), (1M), (1N), (1O), (1P), (1Q), (1R), (1S) und/oder (1T), auf:

-O-R⁶- (1A)

-S-R⁶- (1B)

-O-R⁶-SO₂-R⁶- (1C)

-O-R⁶-SO₂-R⁶-O-R⁶- (1D)

-O-R⁶-SO₂-R⁶-O-R⁶-R⁶- (1E)

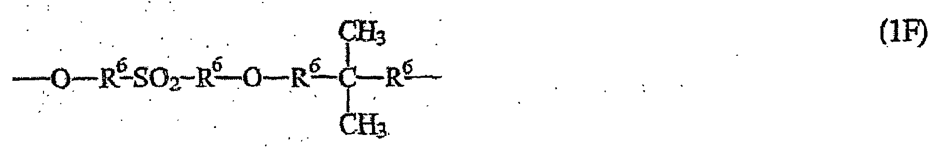

-O-R⁶-SO₂-R⁶-R⁶-SO₂-R⁶- (1G)

-O-R⁶-SO₂-R⁶-R⁶-SO₂₋R⁶-O-R⁶-SO₂-R⁶- (1H)

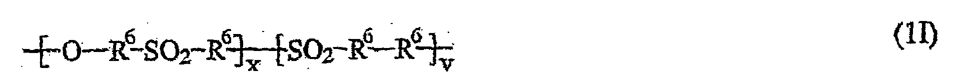

mit 0 < X, Y < 100%
bezogen auf die Anzahl aller wiederkehrenden Einheiten

-O-R⁶-CO-R⁶- (1J)

-O-R⁶-CO-R⁶-CO-R⁶- (1K)

-O-R⁶-CO-R⁶-O-R⁶-CO-R⁶-CO-R⁶- (1L)

-O-R⁶-O-R⁶-CO-R⁶- (1M)

-O-R⁶-O-R⁶-CO-R⁶-CO-R⁶- (1N)

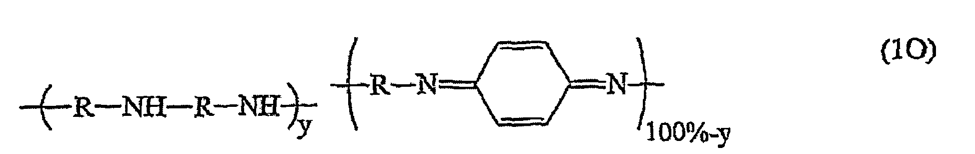

mit0 < y < 100%

-R⁶- (1P)

-R⁶-CH=CH- (1Q)

-CHR⁷-CH₂- (1R)

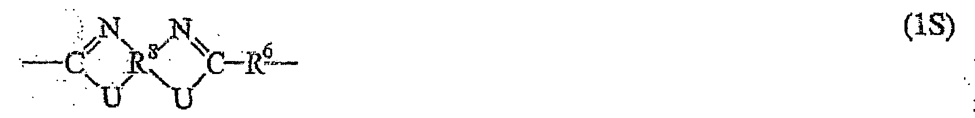

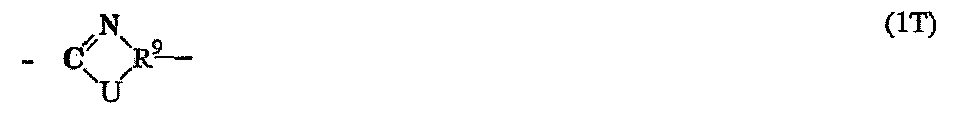

Dabei sind die Reste R⁶ unabhängig voneinander gleich oder verschieden 1,2-Phenylen, 1,3-Phenylen, 1,4-Phenylen, 4,4'-Biphenyl, ein zweiwertiger Rest eines Heteroaromaten, ein zweiwertiger Rest eines C₁₀-Aromaten, ein zweiwertiger Rest eines C₁₄-Aromaten und/oder ein zweiwertiger Pyren-Rest. Ein Beispiel für einen C₁₀-Aromaten ist Naphthalin, für einen C₁₄-Aromaten Phenanthren. Das Substitutionsmuster des Aromaten und/oder Heteroaromaten ist beliebig, im Falle von Phenylen beispielsweise kann R⁶ ortho-, meta- und para-Phenylen sein.

Die Reste R⁷, R⁸ und R⁹ bezeichnen ein-, vier- bzw. dreibindige aromatische oder heteroaromatische Gruppen und die Reste U, die innerhalb einer Wiederholungseinheit gleich sind, stehen für ein Sauerstoffatom, ein Schwefelatom oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt.

Zu den im Rahmen der vorliegenden Erfindung besonders bevorzugten Polymeren mit wiederkehrenden Einheiten der allgemeinen Formel (1) gehören Homo- und Copolymere, beispielsweise statistische Copolymere, wie ®Victrex 720 P und ®Astrel an. Ganz besonders bevorzugte Polymere sind Polyarylether, Polyatylthioether, Polysulfone, Polyetherketone, Poylpyrrole, Polythiophene, Polyazole, Polyphenylene, Polyphenylenvinylene, Polyaniline, Polyazulene, Polycarbazole, Polypyrene, Polyindophenine und Polyvinylpyridine, insbesondere: Polyarylether:

### Polyphenylenoxid

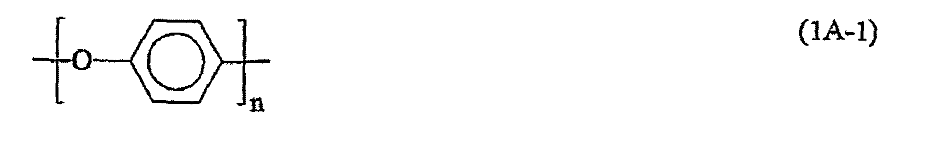

### Polyarylthioether:

### Polyphenylensulfid

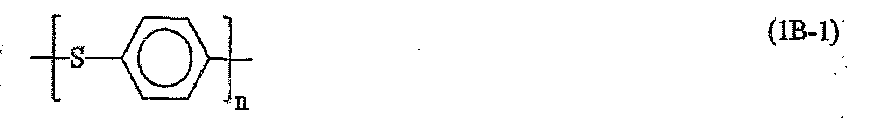

### Polysulfone:

### ^{®}Vietrex 200 P

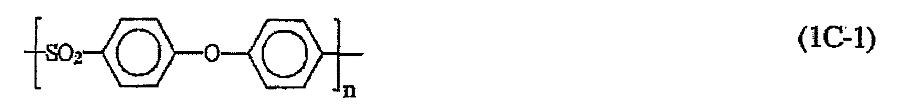

### ^{®}Vietrex 720 P

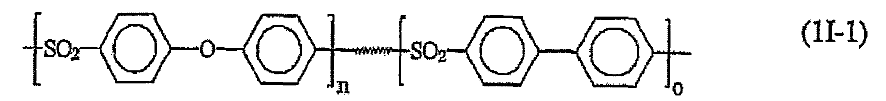

### mit n > 0

### ^{®}Radel

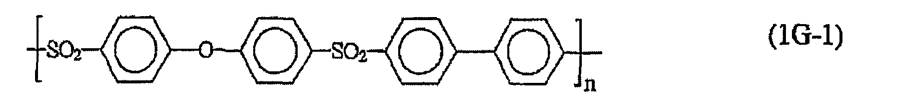

### ^{®}Radel R

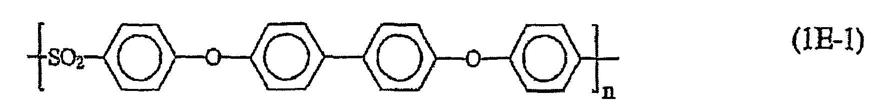

### ^{®}Victrex HTA

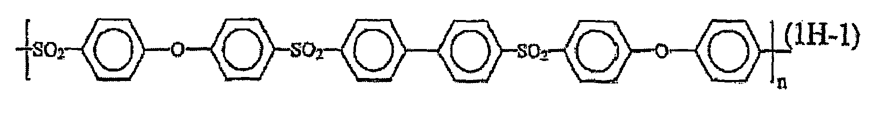

### ^{®}Astrel

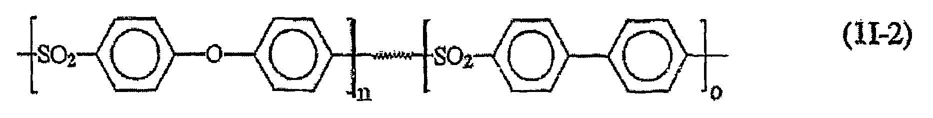

mit n<0

### ^{®}Udel

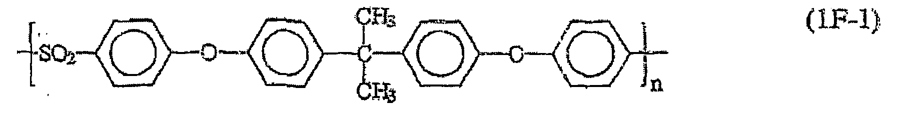

### Polyetherketone:

### PEK

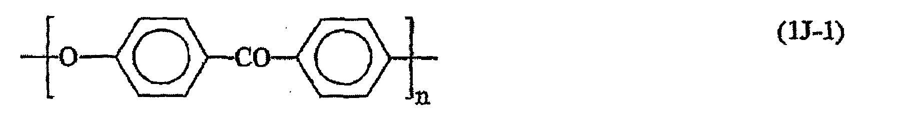

### PEKK

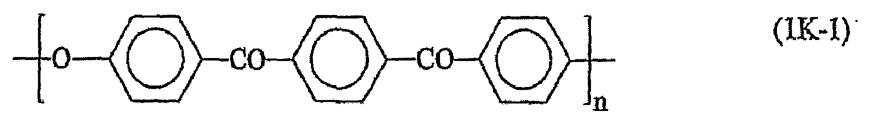

### PEKEKK

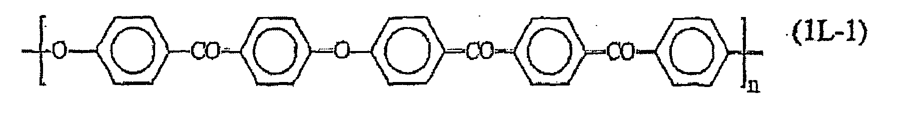

### PEEK

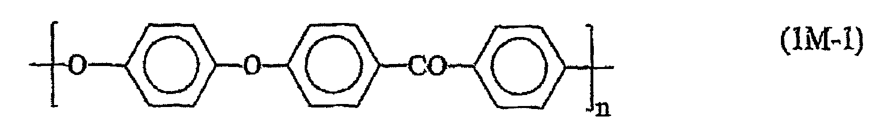

### PEEKK

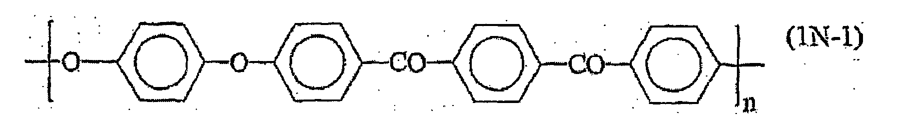

### Polypyrrole:

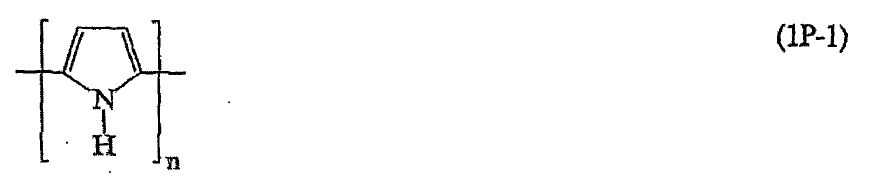

### Polythiophene:

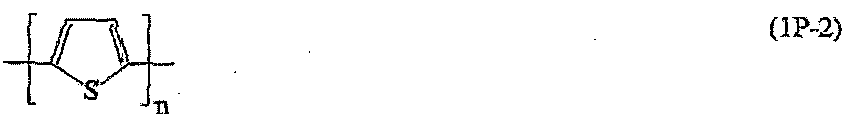

### Polyazole:

### Polybenzimidazol

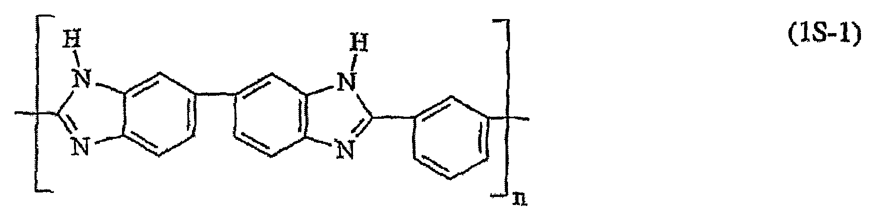

### Polyphenylene:

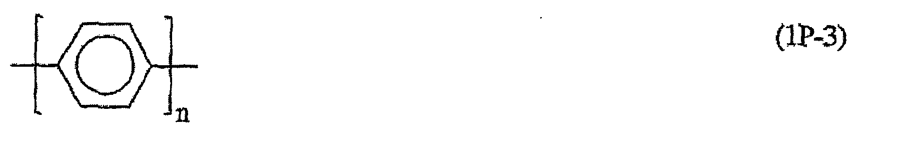

### Polyphenylenvinylen:

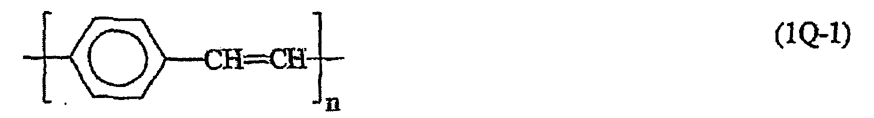

### Polyanilin:

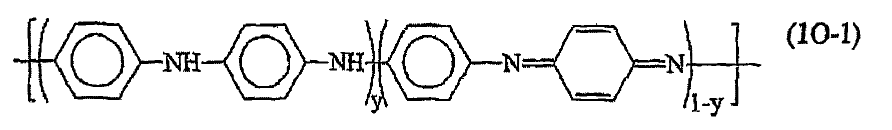

### Polyazulen:

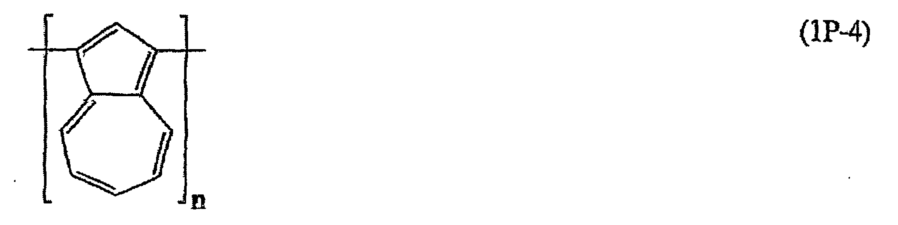

### Polycarbazol:

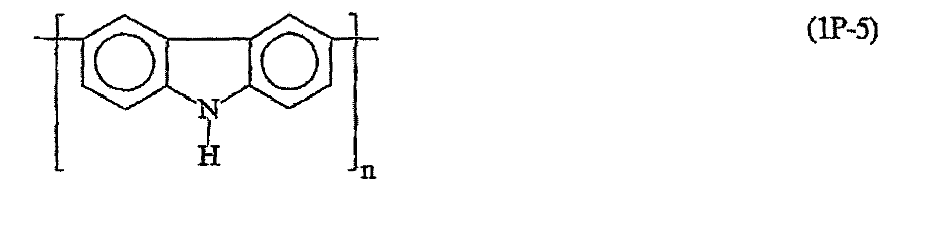

### Polypyren:

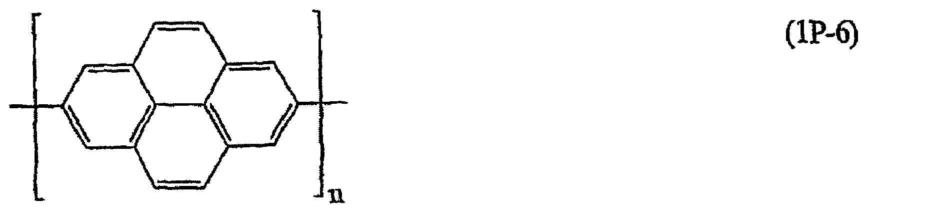

### Polyindophenine:

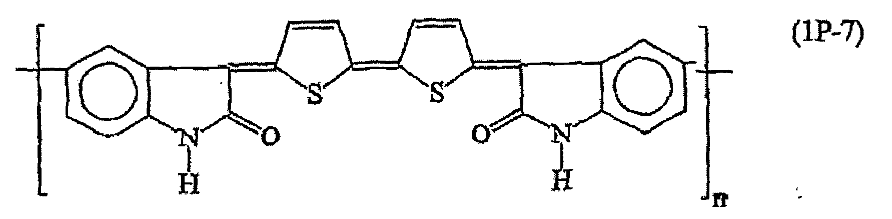

### Polyvinylpyridin:

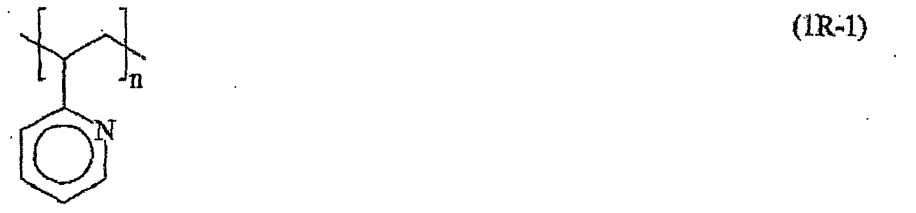

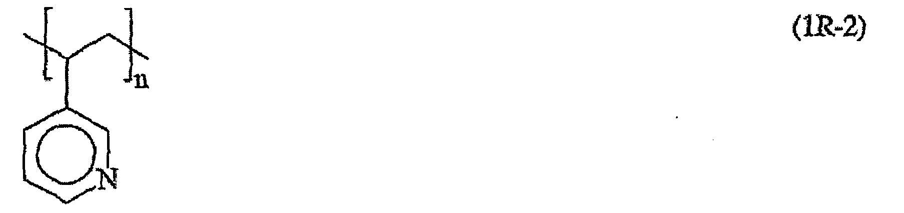

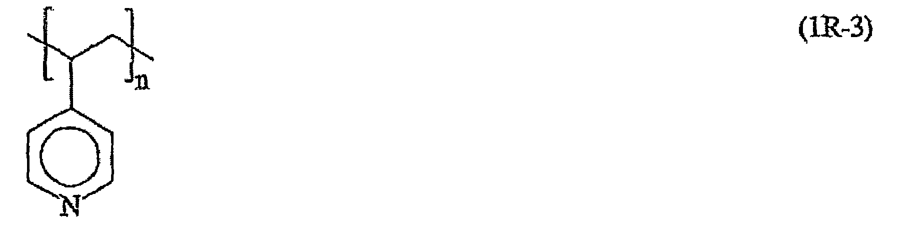

Erfindungsgemäß ganz besonders bevorzugt werden Polymere mit wiederkehrenden Einheiten der allgemeinen Formel (1A-1), (1B-1), (1C-1), (1I-1), (1G-1), (1E-1), (1H-1), (1I-1), (1F-1), (1J-1), (1K-1), (1L-1), (1M-1) und/oder (1N-1).

Im Rahmen der vorliegenden Erfindung bezeichnet n die Anzahl der wiederkehrenden Einheiten entlang einer Makromolekülkette des vernetzten Polymers. Diese Anzahl der wiederkehrende Einheiten der allgemeinen Formel (1) entlang einer Makromolekülkette des Polymers ist vorzugsweise eine ganze Zahl größer gleich 10, insbesondere größer gleich 100. Vorzugsweise ist die Anzahl der wiederkehrende Einheiten der allgemeinen Formel (1A), (1B), (1C), (1D), (1E), (1F), (1G), (1H), (1I), (1T), (1K), (1L), (1M), (1N), (1O), (1P), (1Q), (1R), (1S) und/oder (1T) entlang einer Makromolekülkette des Polymers eine ganze Zahl größer gleich 10, insbesondere größer gleich 100.
In einer besonders bevorzugten Ausführungsform der vorliegenden Erfindung ist das Zahlenmittel des Molekulargewichts der Makromolekülkette größer als 25.000 g/mol, zweckmäßigerweise größer 50.000 g/mol, insbesondere größer 100.000 g/mol.
Die verwendeten Polymere können grundsätzlich auch unterschiedliche wiederkehrende Einheiten entlang einer Makromolekülkette aufweisen. Vorzugsweise jedoch weisen sie entlang einer Makromolekülkette nur gleiche wiederkehrende Einheiten der allgemeinen Formel (1A), (1B), (1C), (1D), (1E), (1F), (1G), (1H), (1I), (1J), (1K), (1L), (1M), (1N), (1O), (1P), (1Q), (1R), (1S) und/oder (1T) auf.
Im Rahmen der vorliegenden Erfindung weist der Rest R in einer bevorzugten Ausführungsform zumindest teilweise Substituenten der allgemeinen Formel (2A), (2B), (2C), (2D), (2E), (2F), (2G), (2H), (2I), (2J), (2K), (2L), (2M), (2N), (2O), (2P), (2Q) und/oder (2R) vorzugsweise der allgemeinen Formel (2A), (2B), (2C), (2D), (2J), (2K), (2L) und/oder (2M), zweckmäßigerweise der allgemeinen Formel (2A), (2B), (2C), (2J), (2K) und/oder (2L) insbesondere der allgemeinen Formel (2J) und/oder (2K) auf:

Weiterhin weist der Rest R einer anderen bevorzugten Ausführungsform teilweise Substituenten der allgemeinen Formel (5A) und/oder (5B), vorzugsweise (5A) auf, 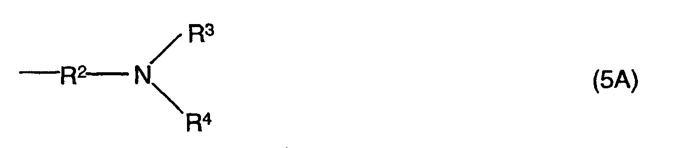 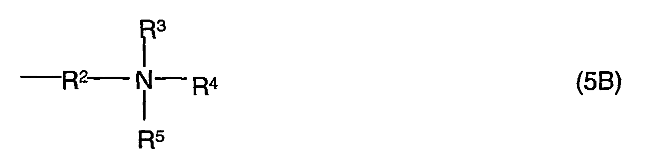 und/oder der Rest R ist zumindest teilweise eine Gruppe der allgemeinen Formel (5C) und/oder (5D), vorzugsweise (5C).

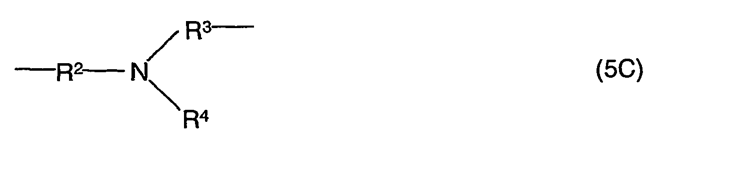

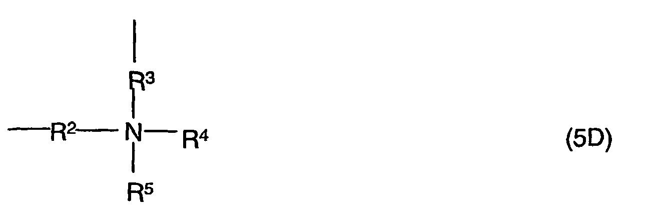

Besonders vorteilhafte Effekte können erzielt werden, wenn R zumindest teilweise Substituenten der allgemeinen Formel (5A-1) und/oder (5A-2) aufweist.

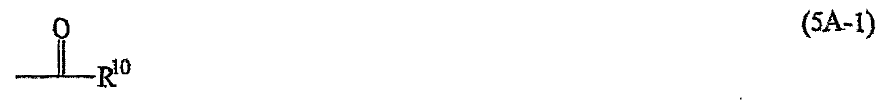

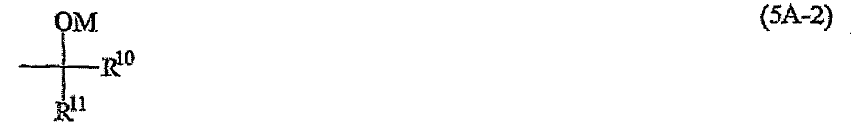

Dabei kennzeichnet die Reste R¹⁰ eine gegebenenfalls alkylierte Arylgruppe, die mindestens eine gegebenenfalls alkylierte Aminogruppe aufweist, oder einen gegebenenfalls alkylierten Heteroaromaten, der entweder mindestens eine gegebenenfalls alkylierte Aminogruppe aufweist oder mindestens ein Stickstoffatom im heteroaromatischen Kern aufweist. R¹¹ ist Wasserstoff, eine Allyl-, eine Cycloalkyl, eine Aryl-, oder eine Heteroarylgruppe oder ein Rest R¹⁰ mit der vorstehend genannten Bedeutung, wobei R¹⁰ und R¹¹ gleich oder verschieden sein können.
Erfindungsgemäß ganz besonders bevorzugt werden Substituenten der Formel (5A-1), bei welchen R¹⁰ ein gegebenenfalls alkylierter Anilinrest oder Pyridinrest, vorzugsweise ein alkylierter Anilinrest ist. Weiterhin werden auch Substituenten der Formel (5A-2) besonders bevorzugt, bei welchen R¹⁰ und R¹¹ gegebenenfalls alkylierte Anilinreste oder Pyridinreste, vorzugsweise alkylierte Anilinreste sind.
Im Rahmen der vorliegenden Erfindung kann der Rest R teilweise Brücken der allgemeinen Formel (6) aufweisen,

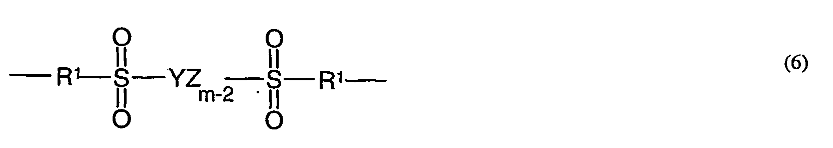

Die mindestens zwei Reste R miteinander verbinden, wobei Y eine 1 bis 40 Kohlenstoffatome aufweisende Gruppe, vorzugsweise eine verzweigte oder nicht verzweigte Alkyl-, Cycloalkyl- oder gegebenenfalls alkylierte Arylgruppe, zweckmäßigerweise eine 1 bis 6 Kohlenstoffatome aufweisende lineare oder verzweigte Alkylgruppe, ist.

Z bezeichnet Hydroxyl, eine Gruppe der allgemeinen Formel 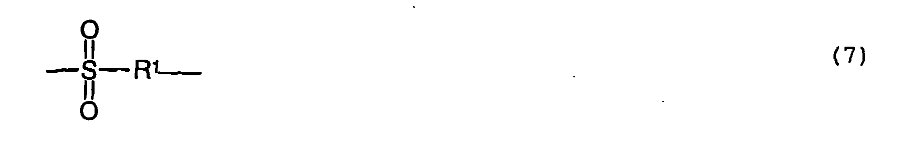 oder eine Gruppe mit einem Molekulargewicht größer 20 g/mol bestehend aus den optionalen Komponenten H, C, 0, N, S, P und Halogenatomen, und m steht für eine ganze Zahl größer gleich 2, vorzugsweise 2.

Im Folgenden sind Beispiele von Zusammensetzungen für Dispersionen und Herstellungsbedingungen zur Herstellung von Brennstoffzelleneinheiten aufgeführt.

### Beispiel für Dispersionen für die Elektroden:

Kathode:
   70 Gew.-% Johnson Matthey Pt-black
   9 Gew.-% in wässrige Form überführte Nafion EW 1100 Lösung (DuPont)
   21 Gew.-% PTFE
   Belegung: 6,0 mg/cm2
Anode:
   80 Gew.-% Johnson Matthey PtRu-black,
   Pt 50%, Ru 50% (Atom-Gew.-%)
   20 Gew.-% in wässrige Form überführte Nafion EW 1100 Lösung (DuPont)
   Belegung: 5,0 mg/cm2
   Dispersion für den Elektrolyten:
      in wässrige und/oder in kationenausgetauschte Form überführte Nafion EW 1100 Lösung (DuPont), mit einem Zusatz von 120%-160% aprotisches Lösungsmittel, wie z.B. DMSO, NMP, und DMAc, wobei DMSO bevorzugt ist, bezogen auf Nafion Alternativ für NaEon® können alle löslichen oder dispergierbaren Polymere, die nach einer oder mehreren Nachbehandlungen wenigstens eine protonenabspaltende funktionelle Gruppe enthalten, die einen IEC größer 0,7 haben, bevorzugt sind Polyarylmaterialien und die erfindungsgemäßen Polymere der Stammanmeldung, die in aprotischen und protischen Lösungsmitteln, wie z.B. DMSO, NMP, THF, Wasser und DMAc, wobei DMSO wieder bevorzugt ist, löslich sind, verwendet werden.

Ein Verfahren zur Herstellung von Elektroden-Elektrolyt-Elektrodeneinheiten ist das Sprühverfahren (Airbrush). Zuerst wird die Kathoden- oder Anodenschicht auf das Trägersubstrat aufgebracht. Die jeweilige Dispersion nach obiger Rezeptur wird dabei auf das Trägersubstrat aufgesprüht. Das Trägersubstrat hat eine Temperatur von 20 bis 180°C, bevorzugt sind 110°C.

Anschließend wird die Elektrode-Substrat-Einheit bei einer Temperatur von 130°C bis 160°C mindestens 20 min getempert. Ebenfalls mit der Sprühmethode folgt das Aufbringen des Elektrolyten. Bei Verwendung einer Nafion-DMSO Dispersion als Elektrolyt-Ausgangssubstanz ist eine Erwärmung der Einheit auf ca. 140°C vorteilhaft. Die Trocknung der Elektrolytschicht kann mit einem Heißluftstrahl beschleunigt werden. Es folgt eine Nachbehandlung im Vakuumtrockenschrank, je nach verwendeter Elektrolytdispersion zwischen 130°C und 190°C, 10 min bis 5 h. Nach Abkühlung auf Raumtemperatur wird die Einheit bei 30 bis 100°C, 30 min. bis 3 h, bevorzugt sind 1,5 h in 0,3 M - 3 M H2SO4 rückprotoniert, d.h. in die Säureform überführt. Danach wird die Einheit 30 min. bis 5 h bei 80-150°C gründlich in Millipore H2O gereinigt. Die entsprechende zweite Elektrode wird wiederum bei etwa 20 bis 180°C auf den Elektrolytfilm aufgesprüht und bei 130°C bis 160°C mindestens 20 min getempert.
Als Trägersubstrat für Einzelzellen kann beispielsweise das Grafitpapier TGP-H-120 der Firma Toray verwendet werden. Es ist vorteilhaft, wenn das Papier tefloniert ist (ca. 15% bis 30% PTFE-Gehalt). In Anordnungen mit flächiger serieller Verschaltung von mehreren Zellen werden elektrisch nicht leitfähige Substrate eingesetzt. Zu den möglichen Materialien zählen verstreckte gefüllte Folien, poröse Keramiken, Membranen, Filter, Filze, Gewebe, Vliese insbesondere aus temperaturbeständigen Kunststoffen und mit geringen Oberflächenrauhigkeiten.
In einer besonderen Ausführungsform werden als poröse Materialien Folien verwendet die Schicht- und/oder Gerüstsilikate enthalten und verstreckt sind.

In Figure 1, 1(A) , 1(B) und 1(C) wird schematisch der Querschnitt einer Brennstoffzelle mit einer Elektrodenstruktur gezeigt, wie sie mit dem klassischen Verfahren, beschichten, einer Membran mit katalysatorenthaltenen Tinten oder mit Druckverfahren hergestellt werden kann. Die Brennstoffzelleneinheit beinhaltet gas- oder flüssige Reaktanden, d.h. die Zufuhr eines Brennstoffes und die Zufuhr eines Oxidationsmittels. Die Reaktanden diffundieren durch poröse Gasdiffusionsschichten und erreichen die porösen Elektroden, welche die Anode und Kathode bilden und an denen die elektrochemischen Reaktionen ablaufen. Die Anode ist von der Kathode durch eine Polymermembran getrennt, die ionenleitend ist. Die Anoden- und Kathodenzuleitungen sind zur Verbindung an einen externen Schaltkreis oder zur Verbindung an weitere Brennstoffzelleneinheiten notwendig. Fig. 1(A) ist eine vergrößerte Ansicht der Kathode der porösen Gasdiffusionselektrode, die auf einer Gasdiffusionschicht geträgert ist und mit der elektrolytischen Polymermembran in Verbindung steht. Die Reaktanden diffundieren durch die Diffusionsstruktur, werden dabei gleichmäßig verteilt und reagieren anschließend in der porösen Elektrode. Figure 1(B) und 1(C) zeigt eine weitere Vergrößerung der Elektrode. Katalytisch aktive Partikel, entweder nichtgeträgerte Katalysatoren oder kohlenstoffgeträgerte Katalysatoren (Metallpartikel, die auf dem Träger verteilt sind) bestimmen die poröse Struktur. Zusätzliche hydrophile oder hydrophobe Partikel können anwesend sein, um die Wasser-Benetzbarkeit der Elektrode zu verändern oder um die Porengröße zu bestimmen. Zusätzlich dazu werden Ionomeranteile in die Elektrode durch Imprägnierung oder durch andere Methoden eingefügt, um die verschiedenen Funktionen einer effizienten Elektrode zu erfüllen: Es wird eine Erhöhung der ionischen Leitfähigkeit der Elektrode und damit verbunden eine Vergrößerung der Reaktionszone der katalytisch aktiven Partikel erreicht. Zugleich wird die elektronische Leitfähigkeit durch das Einbringen der Ionomeranteile, insbesondere perfluorierte Sulfonsäuren, erniedrigt. Bei einer empirischen Optimierung des Gehaltes kann aber ein Kompromiss zwischen elektronischer und ionischer Leitfähigkeit gefunden werden, der die Reaktionszone maximiert. Weiterhin dienen die Ionomeranteile zur Verbesserung der Haftung der Elektrode an die Membran, was insbesondere bei chemisch ähnlichen Materialien gilt. Dieses wird durch das für die Haftung günstige Fließverhalten von den fluorierten Polymeren bewirkt. Bei Verwendung von neuartigen und kostengünstigen Polymermembranen, wie z.B. Säure-Base-Blends auf Basis von Arylpolymeren führt das beschriebe Elektrodenkonzept zur Ausbildung schlecht haftender Schichten. Die Elektrodenstruktur und insbesondere die Grenzfläche zur Membran kann durch die hier beschriebene Erfindung verbessert werden. Anstatt eines Ionomers in der protonierten Form werden ein oder bevorzugt mehrere Ionomere in einer Vorstufen-Form in eine Dispersion oder in Lösung gebracht. Die Elektrolytmembran oder die Diffusionschicht wird mit dieser Dispersion und/oder Lösung als Elektrodentinte mittels geeigneter Verfahren beschichtet. Eine weitere Ausführungsform besteht in der Kombination mehrerer Vorläufer-Ionomere und anorganischer Partikel, um die Benetzbarkeit und die Rückhaltung des Wassers in der Elektrode zu verbessern. Durch eine gezielte Nachbehandlung, z.B. durch Hydrolyse oder durch einen Temperschritt werden die Eigenschaften der Elektrode verbessert. Die so hergestellte Elektrode erfüllt vorteilhaft die für die Anwendung notwendigen Funktionen. Durch das Verwenden von aufeinander abgestimmten Ionomeren und durch die Nachbehandlung findet eine ionische und/oder kovalente Vernetzung der Ionomere in der Elektrode statt, die zu einem ausgedehnten ionisch und/oder kovalentem Netzwerk in der Elektrodenschicht führt. Eine so hergestellte Elektrode besitzt vorteilhafte Eigenschaften sowohl bezüglich der Ausdehnung der Reaktionszone wie auch bezüglich der Haftung zur Membran. Dies gilt insbesondere für Membranen, die nicht aus perfluorierten Kohlenwasserstoffen bestehen. Zusätzlich erlaubt die Verwendung mehrkomponentiger Elektrolytmaterialien einen lagenweisen Aufbau der

Katalysatorschicht, wodurch gezielt Struktur und Eigenschaften der Katalysatorschicht z.B. durch schichtweisen Aufbau oder durch Verwendung von Verfahren, die für Mehrfarbendruck geeignet sind, Verwendung finden können. Die Methode zeichnet sich durch eine außergewöhnliche Variabilität aus, die im weiteren beschrieben wird.

### Nachfolgend eine Beschreibung der Elektrodentinten und Verfahren zu deren Herstellung, Aufbringung und Nachbehandlung der MEA

### 1. Sulfonierte Ionomere in Elektrodentinte

Ein wasserunlösliches sulfoniertes Ionomer wird in einem dipolar-aprotischen Lösungsmittel gelöst (geeignete Lösungsmittel: N-Methylpyrrolidinon NMP, N,N-Dimethylacetamid DMAc, N,N-Dimethylformamid DMF, N-Methylacetamid, N-Methylformamid, Dimethylsulfoxid DMSO, Sulfolan). Durch kontrollierte Zugabe von Wasser werden Microgelteilchen des Polymers erzeugt. Zur gebildeten Suspension wird Katalysator und ggf. Porenbildner hinzugefügt und gerührt, bis die Suspension so homogen wie möglich ist.
Gesamtpolymeranteil in Suspension 1-40 Gew%, bevorzugt sind 3-30 Gew.% und besonders bevorzugt sind 5-25 Gew.%.

### 2. Säure-Base-Blends in Elektrodentinte

### 2a Wasserlösliche Ionomere

Das wasserlösliche Kationenaustauscher-Ionomer wird in der Salzform SO3M, PO3M2 oder COOM (M=1-, 2-, 3- oder 4-wertiges Kation, Übergangsmetallkation, ZrO²⁺, TiO²⁺, Metallkation oder Ammoniumion NR4+ (R=H und/oder Alkyl und/oder Aryl oder Imidazoliumion oder Pyrazoliumion oder Pyridiniumion) in Wasser gelöst. Danach gibt man zur Lösung eine wässrige Lösung eines polymeren Amins oder Imins (z. B. Polyethylenimin), wobei das polymere Amin oder Imin primäre, sekundäre oder tertiäre Aminogruppen oder andere N-basische Gruppen tragen darf. Zur gebildeten Lösung wird Katalysator und ggf. Porenbildner hinzugefügt und die Suspension so sehr wie möglich homogenisiert. Nach Aufbringen der Katalysatorschicht wird die Membranelektrodeneinheit (MEA) in verdünnter wässriger Säure, bevorzugt Mineralsäure, besonders bevorzugt Phospor-, Schwefel-, Salpeter-, und Salzsäure, nachbehandelt. Dabei werden die ionischen Vernetzungsstellen des Säure-Base-Blends gebildet, was zu einer Wasserunlöslichkeit des Ionomeranteils und zu einer mechanischen Stabilisierung in der Elektrodenschicht führt.
In einer speziellen Ausführungsform genügt auch ein Erhitzen der Membranelektrodeneinheit. Voraussetzung ist, dass der Säure-Base-Blend durch Bindungen blockiert ist, die durch Wärmezufuhr bzw. durch den Angriff von erhitztem warmem Wasser gelöst werden. Beispiele hierfür sind polymere Sulfonsäuren, die durch Harnstoff in der Kälte deprotoniert wurden. Weiteres Beispiel sind Gegenkationen der polymeren Säure, die Titan- oder Zirkonkationen enthalten. Das Erhitzen kann auch in Wasser oder Wasserdampf erfolgen, besonders bevorzugt ist der Temperaturbereich bei Verwendung von Wasser zwischen 60°C und 150°C. Auf die Nachbehandlung in Säure kann dann verzichtet werden. Temperaturen über 100°C werden unter Druck z.B in einem Autoklaven realisiert. Der Erhitzungsprozeß kann unter milden Bedingungen auch durch eine Mikrowellenbestrahlung erfolgen.
Gesamtpolymeranteil in Suspension 1-40 Gew%, bevorzugt sind 3-30 Gew.% und besonders bevorzugt sind 5-25 Gew.%.
Vorteil des obengenannten Verfahrens ist das keine Anionen, aus der Säure oder aus der Tinte selbst mit dem Katalysator in Berührung kommen. Die Tinte kann auschließlich auf Wasserbasis hergestellt werden.

### 2b Wasserunlösliche Ionomere

Das wasserunlösliche Kationenaustauscher-Ionomer wird in der Salzform SO3M, PO3M2 oder COOM (M=1-, 2-, 3- oder 4-wertiges Kation, Übergangsmetallkation, ZrO²⁺, TiO²⁺, Metallkation oder Ammoniumion NR4+ (R=H und/oder Alkyl und/oder Aryl oder Imidazoliumion oder Pyrazoliumion oder Pyridiniumion) in einem geeigneten Lösungsmittel, bevorzugt sind dipolar-aprotische Lösungsmittel beispielsweise N-Methylpyrrolidinon NMP, N,N-Dimethylacetamid DMAc, N,N-Dimethylformamid DMF, N-Methylacetamid, N-Methylformamid, Dimethylsulfoxid DMSO, Sulfolan oder Mischungen dieser Lösungsmittel untereinander oder Mischungen dieser Lösungsmittel mit Wasser oder Alkoholen (Methanol, Ethanol, i-Propanol, n-Propanol, Ethylenglycol, Glycerin etc.), gelöst. Danach gibt man zur Lösung eine Lösung eines polymeren Amins, Polymer mit Stickstoffgruppen oder Imins (z. B. Polyethylenimin) in einem geeigneten Lösungsmittel (dipolar-aprotische Lösungsmittel wie beispielsweise N-Methylpyrrolidinon NMP, N,N-Dimethylacetamid DMAc, N,N-Dimethylformamid DMF, N-Methylacetamid, N-Methylformamid, Dimethylsulfoxid DMSO, Sulfolan oder Mischungen dieser Lösungsmittel untereinander oder Mischungen dieser Lösungsmittel mit Wasser oder Alkoholen (Methanol, Ethanol, i-Propanol, n-Propanol, Ethylenglycol, Glycerin etc.)), wobei das polymere Amin, Polymer mit Stickstoffgruppen oder Imin primäre, sekundäre oder tertiäre Aminogruppen oder andere N-basische Gruppen (Pyridingruppen oder andere heteroaromatische oder heterocyclische Gruppen) tragen darf. Zur gebildeten Lösung wird Katalysator und ggf. Porenbildner hinzugefügt und die Suspension so sehr wie möglich homogenisiert. Dabei ist anzustreben, dass der Wasseranteil bei Verwendung von Lösungsmittel/Wasser-Gemischen möglichst hoch ist. Nach Aufbringen der Katalysatorschicht wird die MEA in Säure, bevorzugt in verdünnter wässriger Mineralsäure nachbehandelt. Dabei werden die ionischen Vernetzungsstellen des Säure-Base-Blends gebildet, was zu einer Stabilisierung des Ionomeranteils in der Elektrodenschicht führt. Alternativ kann wieder wie bei der Verwendung von wasserlöslichen Polymeren in Wasser nachbehandelt werden.
Gesamtpolymeranteil in Suspension 1-40 Gew%, bevorzugt sind 3-30 Gew.% und besonders bevorzugt sind 5-25 Gew.%.

### 3. Kovalente Vernetzungskonzepte bei der Herstellung von Dünnschichtelektroden

Das wasserunlösliche Kationenaustauscher-Ionomer wird in der Salzform SO3M, PO3M2 oder COOM (M=1-, 2-, 3- oder 4-wertiges Kation, Übergangsmetallkation, ZrO²⁺, TiO²⁺, Metallkation oder Ammoniumion NR4+ (R=H und/oder Alkyl und/oder Aryl oder Imidazoliumion oder Pyrazoliumion oder Pyridiniumion) oder in seiner nichtionischen Vorstufe SO2Y, POY2, COY (Y=Hal (F, Cl, Br, I), OR, NR2, Pyridinium, Imidazolium) in einem geeigneten Lösungsmittel (dipolar-aprotische Lösungsmittel wie beispielsweise N-Methylpyrrolidinon NMP, N,N-Dimethylacetamid DMAc, N,N-Dimethylformamid DMF, N-Methylacetamid, N-Methylformamid, Dimethylsulfoxid DMSO, Sulfolan oder Mischungen dieser Lösungsmittel untereinander oder Mischungen dieser Lösungsmittel mit Wasser und/oder Alkoholen (Methanol, Ethanol, i-Propanol, n-Propanol, Ethylenglycol, Glycerin etc.) oder reinen Alkoholen oder Mischungen von Alkoholen gelöst. Danach gibt man zur Lösung eine Lösung eines Verntzungsgruppen enthaltenden Polymers in geeigneten Lösungsmitteln (dipolar-aprotische Lösungsmittel wie beispielsweise N-Methylpyrrolidinon NMP, N,N-Dimethylacetamid DMAc, N,N-Dimethylformamid DMF, N-Methylacetamid, N-Methylformamid, Dimethylsulfoxid DMSO, Sulfolan oder Mischungen dieser Lösungsmittel untereinander oder Mischungen dieser Lösungsmittel mit Wasser oder Alkoholen (Methanol, Ethanol, i-Propanol, n-Propanol, Ethylenglycol, Glycerin etc.) oder reinen Alkoholen) hinzu, wobei das Vernetzungspolymer folgende Gruppen tragen kann:
Alkengruppen -RC=CR2 (werden mit Peroxiden oder mit Si-H-Gruppen enthaltenden Siloxanen via Hydrosilylierung vernetzt) und/oder Sulfinatgruppen -SO2M (werden mit Di- oder Oligohalogenverbindungen, z. B. alpha,omega-Dihalogenalkanen vernetzt) und/oder Tertiäre Aminogruppen oder Pyridylgruppen (werden mit Di- oder Oligohalogen-verbindungen, z. B. alpha,omega-Dihalogenalkanen vernetzt). Zur gebildeten Lösung wird Katalysator und ggf. Porenbildner hinzugefügt und die Suspension so sehr wie möglich homogenisiert. Dabei ist anzustreben, dass der Wasseranteil bei Verwendung von Lösungsmittel/Wasser-Gemischen möglichst hoch ist. Vor dem Aufbringen der Katalysatorschicht werden der Suspension Vernetzungsinitiatoren (z. B. Peroxide) oder Vernetzer (Di- oder Oligohalogenverbindungen, Hydrogensiloxane etc.) hinzugefügt. Die vernetzungsfähigen Gruppen in der Tinte reagieren untereinander und mit den vernetzungsfähigen Gruppen der Membran. Um die Reaktion der vernetzungsfähigen Gruppen in der Tinte mit sich selbst einzuschränken wird ein Verfahren beschrieben, das von polymergebundenen Alkylhalogenidgruppen ((Halogen = Jod, Brom, Chlor oder Fluor) bevorzugt ist Jod und Brom)) auf der Membranoberfläche und von polymer gebundenen Sulfinatgruppen in der Tinte ausgeht. Alternativ kann auch von endständigen Arylhalogenidgruppen ausgegangen werden. Dann ist Fluor als Abgangsgruppe bevorzugt.
Diese Verfahren, besonders bei Alkylhalogenid, hat den Vorteil das die Zugabe eines Vernetzters zur Katalysatortinte entfällt. Dies erleichtert wesentlich die technische Herstellung der MEA in der Produktion. Die Tinte wird aufgebracht, z.B. aufgesprüht oder gerakelt und reagiert gezielt mit der Membranoberfläche.
Nach Aufbringen der Katalysatorschicht wird die MEA in verdünnter wässriger Mineralsäure und/oder in Wasser bei einer Temperatur zwischen 0 und 150°C, bevorzugt zwischen 50° und 90°C nachbehandelt. Dabei werden die ionischen Vernetzungsstellen des Säure-Base-Blends gebildet, was zu einer Stabilisierung des Ionomeranteils in der Elektrodenschicht führt. Gesamtpolymeranteil in Suspension 1-40 Gew%, bevorzugt sind 3-30 Gew.% und besonders bevorzugt sind 5-25 Gew.%.

### 4. Verwendung von nichtionischen Vorstufen von Kationenaustauscher-Ionomeren

Die wasserunlösliche nichtionische Vorstufe eines Kationenaustauscher-Ionomers SO2Y, POY2, COY (Y=Hal (F, Cl, Br, I), OR, NR2, Pyridinium, Imidazolium) in einem geeigneten Lösungsmittel (Etherlösungamittel wie Tetrahydrofuran, Diethylether, Dioxan, Oxan, Glyme, Diglyme, Triglyme, dipolar-aprotische Lösungsmittel wie beispielsweise N-Methylpyrrolidinon NMP, N,N-Dimethylacetamid DMAc, N,N-Dimethylformamid DMF, N-Methylacetamid, N-Methylformamid, Dimethylsulfoxid DMSO, Sulfolan oder Mischungen dieser Lösungsmittel untereinander oder Mischungen dieser Lösungsmittel mit Wasser oder Alkoholen (Methanol, Ethanol, i-Propanol, n-Propanol, Ethylenglycol, Glycerin etc.) gelöst. Zur gebildeten Lösung wird Katalysator und ggf. Porenbildner hinzugefügt und die Suspension so sehr wie möglich homogenisiert. Nach Aufbringen der Katalysatorschicht wird die MEA in verdünnter wässriger Mineralsäure nachbehandelt. Dabei werden die nichtionischen Vorstufen der Kationenaustauschergruppen in die Kationenaustauschergruppen umgewandelt. Zur Lösung der Polymere können gegebenenfalls noch basische Polymere oder deren Vorstufen (Aminogruppe durch Schutzgruppe geschützt) oder/und Vernetzer hinzugefügt werden, um die Stabilität des Ionomers in der Elektrodenschicht zu erhöhen.
Gesamtpolymeranteil in Suspension 1-40 Gew%, bevorzugt sind 3-30 Gew.% und besonders bevorzugt sind 5-25 Gew.%.

### 5. Addition anorganischer Nanoteilchen oder von ihren organischen Vorstufen zu Dünnschichtelektroden

Zu den oben beschriebenen Polymerlösungen können noch anorganische Nanoteilchen oder deren organische Vorstufen hinzugefügt werden.

### Anorganische Nanoteilchen:

a) Gegebenenfalls wasserhaltiges stoichiometrisches oder nichtstöchiometrisches Oxid MxOy * n H2O (oder eine Mischung von Oxiden) bzw. Hydroxid, wobei M die Elemente Al, Ce, Co, Cr, Mn, Nb, Ni Ta, La, V, Ti, Zr, Sn, B und W sowie Si darstellt. Alle keramischen Stoffe liegen in Form von nanokristallinen Pulvern (1-1000 nm) vor, die Oberfläche von > 100 m2/g aufweisen. Die bevorzugte Teilchengröße liegt bei 10 - 250 nm.
b) Stöchiometrische oder nichtstöchiometrische schwerlösliche Metallphosphate oder Metallhydrogenphosphate bzw. Heteropolysäuren von Al, Ce, Co, Cr, Mn, Nb, Ni Ta, La, V, Ti, Zr und W, die in Form nanokristalliner Pulver vorliegen.

### Organische Vorstufen:

Metall/Element-Alkoxide/Ester von Ti, Zr, Sn, Si, B, Al
Metallacetylacetonate, z. B. Ti(acac)4, Zr(acac)4
Mischverbindungen aus Metall/Element-Alkoxiden und Metallacetylacetonaten, z. B. Ti(acac)2(OiPr)2 etc.
   organische Aminoverbindungen von Ti, Zr, Sn, Si, B, Al
Die organischen Vorstufen der Metallsalze oder -oxide oder -hydroxide werden bei der Nachbehandlung der herstellten MEAs in wässriger Säure und/oder wässriger Base oder Basenlösung zersetzt, wobei die Metallsalze oder -oxide oder -hydroxide in der Elektrodenmatrix freigesetzt werden.

### Beschreibung der Membranelektrodeneinheit-Entwicklung

Die Verwendung der oben beschriebenen Ionomermaterialien eröffnet eine weite Variabilität der Transporteigenschaften für Ionen; Wasser und Reaktanden in der Brennstoffzelle. Als besonders vielversprechend erweist sich die Beschichtung von Elektrolytmembranen mit einer porösen Katalysatorschicht aus einer wässrigen oder lösungsmittelhaltigen Suspension.
Die fertige Katalysatorschicht besteht aus folgenden Feststoffbestandteilen
- 20-99, wt % Katalysatoranteil
- 0,1-80wts% Ionomeranteil
- 0-50 wt% Hydrophobierurigsmittel (z.B PTFE)
- 0-50 wt% Porenbildner (z.B. (NH₄)₂CO₃)
- 0-80 wt% elektronisch leitende Phase (z.B. Leitruß, oder C-Faserkurzschnitt)
Der Feststoffgehalt in der zur Beschichtung verwendeten Suspension beträgt 1-60 wt%.
Zur Beschichtung können folgende Verfahren zum Einsatz kommen.
- Sprühbeschichtung
- Druckverfahren
   z.B. Siebdruck, Hochdruck, Tiefdruck, Tampondruck, Tintenstrahldruck, Schablonendruck.

Die Verwendung mehrkomponentiger Elektrolytmaterialien erlaubt einen lagenweisen Aufbau der Katalysatorschicht, wodurch gezielt Struktur und Eigenschaften der Katalysatorschicht z.B. durch schichtweisen Aufbau oder durch Verwendung von Verfahren, die für Mehrfarbendruck geeignet sind, Verwendung finden können.
Durch Variation des Gesamtanteils an ionisch leitender Phase sowie deren Vorliegen in der Elektrodentinte (Lösung, Suspension) können Porosität und Leitfähigkeit der Schichten gezielt beeinflust werden.
Durch Aufbau gradierter Schichten z.B. durch Variation des Anteils saurer und basischer Polymere können mechanische Eigenschaften, die ionische Leitfähigkeit, das Wasserbindungsvermögen und die Quellungsfähigkeit der Katalysatorschichten beeinflußt werden.
Durch die Verwendung vollständig wasserlöslicher Ausgangsinomere wird die Kontamination der Katalysatoroberflächen durch organische Lösungsmittel verhindert.

Die Freisetzung anorganischer Nanoteilchen kann den Wasserhaushalt in der Katalysatorschicht positiv beeinflussen.
Der Einsatz protonenleitender anorganischer Nanoteilchen erlaubt den Betrieb unter reduzierter Befeuchtung.

Alle neuartigen Ionomerstrukturen in der Elektrodenstruktur bewirken gute Leistungsdichten der Zelle und verbessern entscheidend die Haftung der Elektrode an die Membran. Dieses ist insbesondere für den Langzeitbetrieb wichtig.Es zeigt sich, dass gute Leistungsdaten der Zelle insbesondere bei niedrigen Ionomergehalten mit den neuartigen Elektrodenstrukturen im Vergleich zum häufig benutzten Nafion-Ionomer erreicht werden. Beste Ergebnisse werden für 1 G-% und 10-G % erzielt, während bei Nafion die entsprechenden Werte bei 15 - 40 G-% liegen. Dies verdeutlicht die Ausbildung eines ausgeprägten Ionomer-Netzwerkes, dass auch den geringeren Bedarf an kostenträchtigen Ionomer für die Elektrodenherstellung bedeutet.

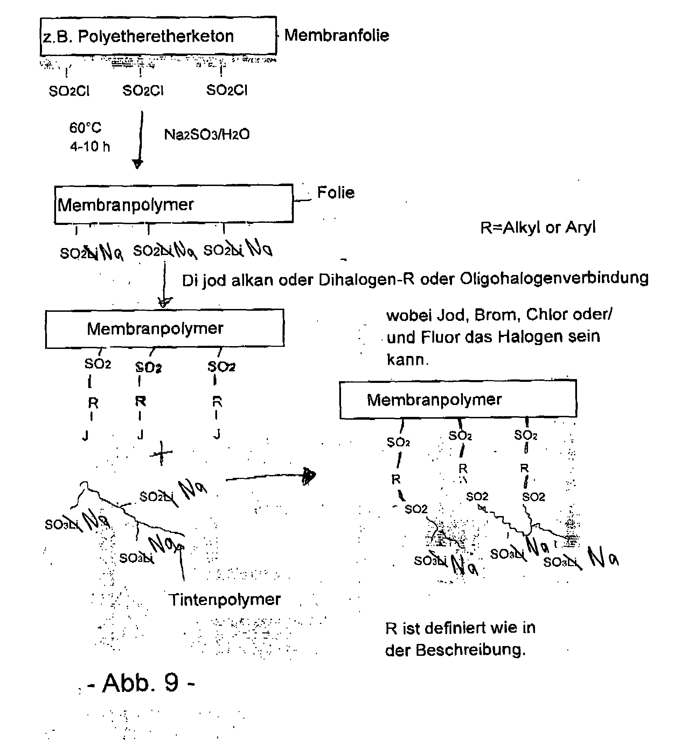

Nachfolgend wird ein erfindungsgemäßes Verfahren beschrieben wie Polymere, die in einer Tinte enthalten sind kovalent an eine Membran angebunden werden. Es wird von einer Membran ausgegangen, die wenigstens an ihrer Oberfläche Sulfonsäurechloridgruppen trägt. Diese werden in einer wäßrigen Natriumsulfit-Lösung teilweise bevorzugt an der Oberfläche zu Sulfinatgruppen reduziert. Die Katalysator-Tinte enthält zusätzlich zu den bereits oben beschriebenen Beispielen wenigstens noch ein Polymer, das Sulfinatgruppen trägt. Kurz, d.H. weniger als 15 Minuten vor dem Aufsprühen der Tinte auf die Membran, wird zur Tinte eine di- oder oligo- Halogenverbindung gegeben. Es kommt zur bekannten kovalenten Vernetzung der Sulfinatgruppentragenden Moleküle sowohl von den polymeren Molekülen in der Tinte, als auch zwischen den polymeren Molekülen der Tinte und der Membranpolymere, die ja vernetzungsfähige Sulfinatgruppen an ihrer Oberfläche haben.
Eine Variation dieses Verfahrens ist die Sulfinatgruppen, an der Oberfläche der Membran vor dem in Kontakt bringen mit der Katalysator-Tinte, mit einem Überschuß an di- oder oligoHalogenverbindungen abreagieren zu lassen, so daß nun endständige Halogengruppen tragende Reste sich an der Membranoberfläche befinden. Sprüht man nun die Tinte auf werden die Sulfonatgruppen der Tintenpolymere ausschließlich mit den endständigen vernetzungsfähigen Halogengruppen der Membranoberfläche kovalent vernetzten (Abb.9).
In einer weiteren Variation kann die Reihenfolge auch vertauscht werden. Die Membranoberfläche trägt die Sulfinatgruppen, während die Tintenpolymere endständige Vernetzungsfähige Halogengruppen tragen. Dieses Verfahren Polymere mit endständigen vernetzungsfähigen Halogengruppen und Polymere mit endständigen Sulfinatgruppen miteinander kovalent zu vernetzen kann auch in den oben angeführten Sprühverfahren zum gezielten Aufbau von selektiven bzw. funktionellen Schichten genutzt verwendet werden. In einer bevorzugten Ausführungsform haben die Halogengruppen tragenden Polymere bzw. die Sulfinatgruppen tragenden Polymere zusätzlich noch weitere funktionelle Gruppen auf der gleichen Polymerhauptkette.
Beispiel zur Ausführung: Polyetheretherketonsulfonsäurechlorid wird in NMP gelöst auf einer Unterlage z.B. eine Glasplatte zu einem dünnen Film ausgezogen. Das Lösungsmittel wird in einem Trockenschrank abgedampft. Die Folie wird von Glasplatte abgetrennt und in eine wässrige Natriumsulfit-Lösung gegeben. Die Natriumsulfitlösung ist eine in Wasser gesättigte Lösung bei Raumtemperatur. Die Membran wird mit der Lösung auf eine Temperatur von 60°C gebracht. Dabei werden die Sulfonsäurechloridgruppen bevorzugt an der Oberfläche zu Sulfinatgruppen reduziert. Jetzt kann auf mehren Wegen weiter gegangen werden.
Weg 1: Die Folie mit den oberflächlichen Sulfinatgruppen wird mit einer di- oder oligo-Halogenverbindung, z.B. Dijodalkan im Überschuß in einem die Membran nicht lösenden Lösungsmittel (z.B. Aceton) versetzt. Mit Überschuß ist gemeint, dass mehr als doppelt so viel Halogenatome vorhanden sind im Alkylierungsreagenz, als an abzureagierenden Sulfinatgruppen existieren. Die Sulfinatgruppen reagieren mit dem di-jod-alkan zu Polymer-SO2-Alkan-Jod. Die Oberfläche der Folie trägt nun endständige vernetzungsfähige Alkyljodide. Eine Katalysatortinte wird so hergestellt, daß sie zu weiteren anderen funktionellen Gruppen auf Polymeren noch Polymere enthält, die Sulfinatgruppen tragen. Diese Reagieren augenblicklich bei Benetzung mit der Membranoberfläche kovalent mit den endständigen Alkyljodidgruppen ab. Diese kovalente ist die festeste Verbindung die ein Membranpolymer mit einem Tintenpolymer eingehen kann. Der endstandene Verbund ist äußerst stabil.

Wasserlösliche sulfonierte Polymere bilden mit polymeren Aminen wasserunlösliche Komplexe. Die ist Stand der Technik. Es wurde nun überraschend festgestellt, das sulfonierte Polymere in Wasser gelöst sich mit einem herkömmlichen Tintenstrahldrucker definiert auf eine Oberfläche aufbringen lassen. Die Grenze ist die Punktauflösung (dot/inch) der Druckpatrone. Polymere Amine mit einem hohen Gehalt an Stickstoffgruppen, der IEC an Basischen Gruppen muß über 6 liegen, insbesondere Polyvinylpyridin (P4VP) und Polyethylenimin lassen sich in verdünnter Salzsäure, Polyethylenimin auch nur in Wasser, auflösen. Dabei nimmt der pH-Wert der Lösung zu. Dies gelingt bis zur Neutralität. Das Hydrochlorid des polymeren Amins, hier von P4VP ist nun in Wasser gelöst und läßt sich überraschender Weise ebenfalls sehr einfach über einen Tintenstrahldrucker auf eine Oberfläche auftragen. Verwendet man nun eine Druckpatrone, die ein Kammersystem für verschiedene Farben hat, so läßt sich ein beliebiges Gemisch von einer polymeren Säure und einer polymeren Base auf eine Öberfläche aufdrucken bzw. aufbringen. Die basischen und sauren Polymere reagieren zu wasserunlöslichen dichten Polyelektrolytkomplexen ab. Das Verhältnis zwischen des polymeren Säure und der polymeren Base läßt sich über die Software beliebig einstellen. Es lassen sich so Gradienten von sauren und basischen Polymern und den Gemischen in jedem gewünschten Verhältnis herstellen. Die Auslösung ist alleine von der Auflösung der Druckpatrone abhängig. Mit diesem Verfahren lassen sich nach einiger Übung auch Disperionen von Katalysatortinten die Kohlenstoffpartikel enthalten versprühen in Kombination mit polymeren Säuren und polymeren Basen. Dadurch lassen sich Mikrobrennstoffzellen erzeugen, die durch die Membran hindurch über gedruckte elektronenleitfähige Strukturen, wahlweise in Serie oder paralell verschaltet werden können. Beispiel zur Ausführung: Der Druckpatrone aus einem Deskjet (HP) wird das Schaumstoffkissen entfernt und die entsprechende wässrige Lösung entweder des polymeren Amins oder der polymeren Säure eingefüllt. Zweckmäßigerweise wird der Behälter nicht vollständig gefüllt (die Hälfte ist ausreichend). Grafitpapier oder Kohlefasergewebe, welches vorher schon mit Katalysator im Sprühverfahren beschichtet worden ist, wird nun wie ganz normales Papier bedruckt. Das Verfahren kann mehrfach abgewechselt und wiederholt werden so entsteht ein Säure-Base-Blend. Auf der Oberfläche des Grafitpapier.
Zur direkten Darstellung eines Säure-Base-Blends wird eine Mehrkammerfarbpatrone mit den Lösungen für die polymere Säure und die polymere Base befüllt. Zusätzlich wird die dritte Kammer (HP-Tintenstrahlpatrone) mit einer Lösung befüllt die Platin-hexa-chlorid enthält. Die Patrone für die "schwarze" Farbe wird für eine Kohlenstoffdisperion verwendet die als Treibmittel im Inkjet-Prozeß noch Zusätze von niedrigsiedenden Alkoholen enthält, bevorzugt sind 3-7% Isopropanol. Damit lassen sich Kohlenstoffpartikel, die kleiner als die Düsenöffnungen der Inkjet-Patrone sind versprühen. Eine nahezu unbegrenzte Anzahl von Variationsmöglichkeiten im Schichtaufbau sowohl vertikal als auch horizontal sind dadurch realisierbar. Es lassen kleinste Strukturen gezielt aufbauen.

### Nachfolgender Text enthält Ausführung + Messwerte

Das Ziel der vorliegenden Arbeit war mit neuartigen Herstellungsmethoden Direktmethanolbrennstoffzellen zu bauen. Die Idee war nicht vorgefertigte Membranen zu verwenden, auf denen Elektroden angebunden werden, sondern die MEA Schicht-auf-Schicht herzustellen. Der Elektrolyt ist nur eine der Schichten. Eine viel bessere Kontrolle der Struktureigenschaften in einem solchen Mehrschichtkonzept wird angenommen. Die Mehrschichtstruktur beginnt mit einem porösen Substrat auf das eine poröse, katalytisch aktive Gasdiffusionsschicht abgeschieden wird. Der nächste Schritt besteht darin, die poröse Struktur mit einem dichten und festen Elektrolytfilm zu bedecken, auf dem wieder eine poröse Elektrodenschicht, die zweite Elektrode aufgebracht wird. Neue Prozesse müssen entwickelt werden, um eine solche komplexe Mehrschichtstruktur zu schaffen bestehend aus sich abwechselnden porösen und dichten Schichten. Wichtig ist in diesem Zusammenhang ist die Wahl geeigneter Substrate, Elektroden- und Elektrolytstrukturen. Vom technischen Standpunkt aus ist das Ziel des Projektes verschiedene Zellen seriell in einer Ebene zu verbinden während der Herstellung der MEA. Solch ein Herstellungsprozess wäre sehr wünschenswert aufgrund seiner Einfachheit und Wirksamkeit.

### Herstellung und Vorbereitung der Membranelektrodeneinheit

Verschiedene Materialien wie Graphitpapier, Filtermedien und Fließe wurden als Substrate getestet. Die MEA Herstellung selbst besteht bisher daraus, Flüssigkeiten auf Substrate zu sprühen (Airbrush). In einem ersten Schritt werden verschiedene Schichten eines flüssigen Kompositmaterials, welches die poröse Kathodenschicht ergibt, auf ein poröses Substrat gesprüht, z.B. Karbonpapier von Toray. Dann wird eine dichte Elektrolytschicht ebenfalls durch Sprühen aufgebracht. Im Gegensatz zur ersten Schicht sollte die Elektrolytschicht methanolundurchlässig sowie luftdicht sein. Im letzten Schritt wird die poröse Elektrodenschicht aufgesprüht, die die Anodenstruktur darstellt. Die Sprühlösung für die Elektroden ist eine Katalysatortinte (eine Suspension von Katalysator, lonomer und manchmal PTFE Zugaben). Die lonomere der Elektrode und Elektrolytherstellung werden aus alkoholischen Nafionsuspensionen hergestellt. Zum Sprühen wird die Unterlage auf einem Heiztisch fixiert. Während des Sprühens wird die Temperatur auf einen höheren Wert als der Siedepunkt des Lösungsmittels geregelt. So verdampft das Lösungsmittel schnell und die gewünschten homogenen Strukturen werden gebildet. Nach dieser allgemeinen Prozedur wurden funktionelle Einzelzellen hergestellt.

### Herstellung der Elektroden

Die Katalysatortinten werden durch Dispergieren von ungeträgertem Katalysator in hochreinem Wasser aus Millipore Filtersystemen hergestellt. Dann wird bis zum gewünschten Nafionanteil in der Tinte Nafionlösung zugegeben. Nafion ist notwendig sowohl für die Anbindung der Elektrode als auch um Protonenleitfähigkeit für die aktive Schicht bereitzustellen. Die Entzündung der Alkohollösung in der Sprühprozedur stellt eine mögliche Gefahr dar. Deshalb wurde im Rotationsverdampfer aus einer 15-Gew.% Nafionlösung mit einem Equivalentgewicht von 1100 eine alkoholfreie Nafionlösung hergestellt. Während des Verdampfens wurde hochreines Millipore Wasser zugegeben und eine verdünnte Lösung mit einem Nafiongehalt von 5-8% erhalten. Die Herstellung der Katalysatortinte erfolgte durch Rühren für wenigstens drei Tage. Nur nach dieser Herstellungsprozedur konnten Elektrodenschichten mit genügender Anbindung an den Elektrolyten produziert werden. Falls jedoch die Tinte zu lange gerührt wird (> 2 Wochen) wurden geringe Leistungsdichten besonders bei hohen Temperaturen beobachtet. Es wird angenommen, daß dies aufgrund von Agglomeration von Katalysatorteilchen in der Tinte geschieht. Die besten Ergebnisse wurden unter folgenden Bedingungen erzielt:

**Tabelle 1: Bedingungen zur MEA Herstellung mit den besten bisherigen Ergebnissen**

| **Kathode:** | **Anode:** |
|---|---|
| 72 Gew.% Johnson Matthey Pt-black | 85 Gew.% Johnson Matthey PtRu-black, Atomverhältniss 1:1 |
| 8 Gew.% alkohlfreie Nafion EW 1100 Lösung | 15 Gew.% alkohlfreie Nafion EW 1100 Lösung |
| 20 Gew.% PTFE Gehalt | Kein PTFE |
| Beladung: 6,4 mg/cm2 | Beladung: 5,2 mg/cm2 |

Kurz bevor die Kathodenkatalysatorünte gesprüht wird, wird eine PTFE Suspension (Dyneon TF5032 PTFE, 60%) zugegeben und für kurze Zeit gerührt. Wenn die Lösung in der Gegenwart von PTFE zu lange gerührt wird (länger als 10 Min.), kommt es zur Klümpchenbildung welches die Sprühdüse verstopft. Die PTFE Zugabe ist notwendig, um hydrophobe Bereiche in der Kathode zu bilden, um damit das Überfluten der Poren im DMFC Betrieb zu verhindern. Diese hydrophoben Eigenschaften verbessern beträchtlich den Luftzutritt an die aktiven Stellen. Diese Verbesserung wird besonders bei höheren Leistungsdichten beobachtet, bei welchen viel mehr Reaktionswasser gebildet wird. Nach der Herstellung der Elektroden durch Sprühen folgt ein Temperschritt bei 135 °C und >25 Min. im Ofen. Das Überschreiten der Glasübergangstemperatur des lonomers erzeugt Schichten mit besserer Stabilität in Wasser und Methanollösungen.

### Herstellung der Elektrolytschichten

Als Elektrolytmaterialien wurden verwendet Nafion EW 110, Nafion EW 950 sowie Säure-Base-Blend Polymer vom ICVT (Universität Stuttgart, Gruppe Dr. Kerres).
Diese Elektrolyte basieren auf sulfoniertem Poly(etheretherketon) (sPEEK) oder sulfoniertem Polyetherketon (sPEK). Der Elektrolytfilm wurde wieder aus alkoholfreier Nafionlösung wie oben beschrieben hergestellt. Nafion hat nicht leicht dichte Filme auf der Kathode gebildet. Aufgrund des starken Quellens von Nafion wird während des Sprühens eine Verformung des Films beobachtet (nasse Beschichtung auf trockenen Beschichtungen). Diese ungleiche Ablagerung führt häufig zum Ablösen des Elektrolytfilmes von der Kathode. Es wurde herausgefunden, daß eine hohe Temperatur von ca. 150 °C zusammen mit dem Einwirken von heißer Luft aus einem Lüfter vorteilhaft ist.

Die Arylpolymermembranen vom ICVT wurden über Nacht in 10%ige NaOH Lösung eingelegt, da die Membranen sich in der Na-Form schneller lösen. Nach sorgfältigem Entfernen von NaOH mit hochreinem Wasser, werden die Membranen vollständig in NMP-Wasser Gemischen aufgelöst. Im Gegensatz zu Nafionlösungen bilden die ICVT lonomere homogene Schichten beim Sprühen. Nur sehr selten werden Sprünge oder Spalten mit ICVT Lösungen beobachtet und optimale Ergebnisse werden bei Sprühtemperaturen von < 120 °C erhalten. Da NMP einen Siedepunkt von 202 °C besitzt, trocknen die Schichten langsam, was die Bildung eines homogenen Filmes begünstigt. Das Sprühen wurde fortgesetzt bis ein dichter Film auf der Kathode entstand und kein elektronischer Kontakt zur Elektrode gemessen werden konnte. Die Elektrolytoberfläche wurde mit dem optischem Mikroskop untersucht und die Dicke der Elektrolytschichten zu 30 µm bis 110 µm für ICVT lonomere und zu 120 µm bis 300 µm für Nafion lonomere bestimmt. Die Dicke des Elektrolytfilmes variiert stark innerhalb der aktiven Fläche aufgrund der Rauheit der darunter liegenden Kathodenoberfläche. Die beste Bestimmung der Dicke der Schichten wurde durch die Untersuchung eines Schnittes einer mit flüssigem Stickstoff gefrorenen MEA mit dem SEM erzielt.

Bevor die Anodenschicht gesprüht wird, wird der Elektrolyt in die protonenleitende Form überführt. Dies wird durch Eintauchen in 0,5 M bis 2 M H₂SO₄ bei ca. 100 °C für 2 h erreicht. Nach dieser Behandlung wird die Säure durch Spülen und Waschen mit Millipore Wassser (1 h, ca. 100 °C) entfernt.

Ein wichtiges Thema ist die Wahl des Substrates. Aus den erhaltenen Messungen werden strenge Anforderungen für die Substrateigenschaften abgeleitet:

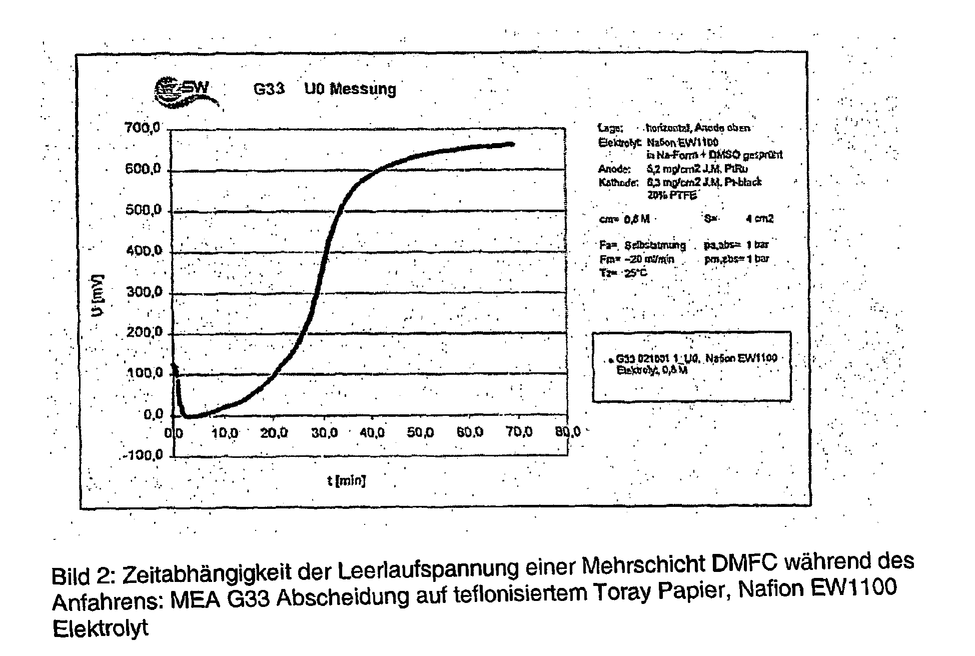

Die Substrate müssen porös und luftdurchlässig sein; Luftflußraten von ca. 0,5 bis 5 ml(Min. cm²) sind notwendig je nach Leistungsdichte der Zelle. Die Substrate müssen temperaturstabil bis zu 180 °C für ca. 2 h sein. Weiterhin ist eine chemische Stabilität in 2 M H₂SO₄ bei 100 °C, in 5% Methanollösung und in NMP notwendig. Für manche Anwendungen sollten die Substrate Isolatoren sein damit die in Serie Schaltung mehrerer Zellen möglich ist. Eine große mechanische Stabilität ist auch notwendig, besonders eine hohe Zugfestigkeit, um die Beanspruchung durch das Quellen des lonomers in einer Mehrschicht auszuhalten. Zusätzlich sollte die Oberfläche idealerweise flach sein mit nur einer kleinen Oberflächenrauhigkeit, die hilft homogene Filme zu bilden. Bis jetzt wurden die besten Ergebnisse mit Graphitpapier von Toray (Toray paper) erzielt. Auch einige Keramikmaterialien und Kohlenstoff Stoffmaterialien wurden untersucht.

### Betrieb der Zellen

Zum Zusammenbau der Zelle wird die MEA zuerst in einem dünnen Polymerrahmen, z.B. aus einer temperaturstabilen Overhead-Folie, befestigt und mit Silikonpaste abgedichtet. Die Einheit ist angeordnet zwischen zwei Titanblätter mit regelmäßig angeordneten Löchern. Diese Titanblätter geben den elektrischen Kontakt und ermöglichen die Versorgung mit Gas und Flüssigkeit der MEA. Die übereinander geschichtete MEA wird in einer Acrylglaszelle zusammengebaut. Die Kathode bleibt offen zum Betrieb der Zelle als Luftatmer. Eine Pumpe zirkuliert die Methanollösung aus einem kleinen Tank über der Zelle in die Anodenkammer. Der Druck an der Anode entspricht dem Luftdruck und Messungen wurden bei Raumtemperatur gemacht. Eine neu zusammengebaute Zelle wird zunächst im Leerlauf 2 h lang einer 0,8 M Methanollösung ausgesetzt bevor eine elektrische Last angelegt wird. Während dieser Zeit wird die Leerlaufspannung aufgezeichnet. Aus der Entwicklung der Leerlaufspannung (600 mV) kann abgelesen werden, ob die Elektrolytschicht dicht genug für den DMFC Betrieb ist. Niedrige oder sogar negative Zellspannungen zeigen eindeutig Leckagen in der Membran oder sogar Kurzschlüsse der Elektroden an. Messungen wurden mit Methanolkonzentrationen von 0,5 M, 0,8 M und 1,5 M gemacht. Einige Messungen wurden auch bei ca. 50 °C gemacht, was durch Zirkulieren einer erhitzten Methanollösung erreicht wurde.

### Teflonisiertes Toraypapier als Trägerstruktur

Ein erfolgreicher Betrieb wurde mit teflonisiertem Toraypapier als Substrat erhalten. Bild 3 zeigt MEA Nr. G33 mit 350 µm dickem Toraypapier und ca. 25 Gew.% PTFE Gehalt. Es wurde gefunden, dass die Hydrophobie von gleichem Vorteil ist wie bei der Verwendung von Toraypapier als Gasdiffusionsschicht. Die glänzende Oberfläche auf dem Bild ist die EW 1100 Elektrolytschicht unter der eine 4 cm2 Kathode zu sehen ist. Die Dicke der Elektrolytschicht variiert zwischen 125 µm und 200 µm.

Nach dem ersten Kontakt mit der Methanollösung steigt die Leerlaufspannung in Bild 2 schnell auf über 100 mV an und sinkt danach auf 0 mV oder sogar negative Spannungen ab. Die Zellspannung ist je nach Zelltyp, der Schichtqualität und der Dicke des Elektrolyten verschieden. Zunächst ist ein kleiner Anstieg zu beobachten aber dann nimmt der Spannungsantieg rasch zu, wie klar auf Bild 2 zu sehen ist. Dieses Verhalten ist typisch für Nafion. Nach 70 Min. nimmt die Spannung nicht mehr zu und eine stationäre Kurve ist erreicht.

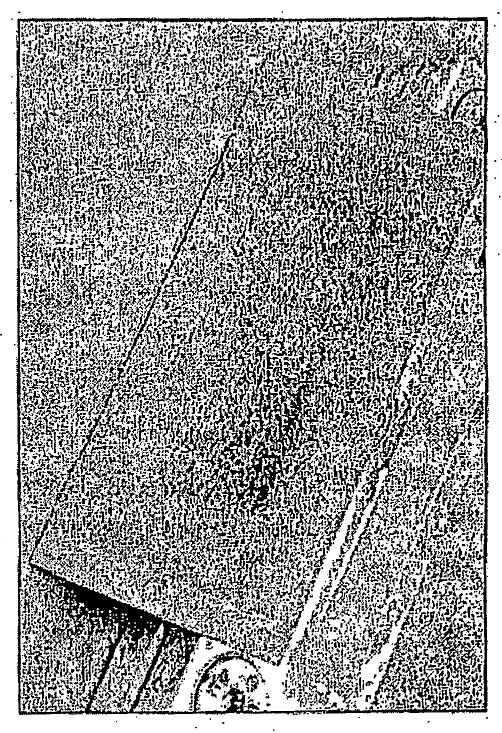

## Patentansprüche

1. Verfahren zur Herstellung auf einem Schichtaufbau basierende galvanischer Elemente mit funktionalen Schichten, **dadurch gekennzeichnet dass** auf ein poröses Trägersubstrat nacheinander die einzelnen Schichten verschiedener Funktionalität aus Dispersionen oder Lösungen aufgebracht werden, wobei die einzelnen Schichten aus Dispersionen und/oder Lösungen durch Sprüch- oder Druckverfahren aufgebracht werden.

2. Verfahren nach Anspruch 1, **dadurch gekennzeichnet, dass** ein poröses Trägersubstrat mit einer offenen Porosität von mindestens 70% verwendet wird.

3. Verfahren nach Anspruch 1 und/oder 2, wobei ein poröses Trägersubstrat mit einer Biegesteifigkeit von wenigstens 35 MPa und einem Elastizitätsmodul von wenigstens 9000 MPa eingesetzt wird.

4. Verfahren nach mindestens einem der vorangehenden Ansprüche, wobei das Trägersubstrat ausgewählt wird aus elektronisch leitfähigen Materialien, vorzugsweise Graphitpapier.

5. Verfahren nach mindestens einem der Ansprüche 1 bis 3, wobei das Trägersubstrat ein elektronisch nichtleitfähiges ist.

6. Verfahren nach mindestens einem der vorangehenden Ansprüche, wobei auf das poröse Trägersubstrat als Schichten verschiedener Funktionalität nacheinander eine poröse Elektrodenschicht, eine gasdichte Elektrolytschicht und darauf erneut eine poröse Elektrodenschicht aufgebracht werden.

7. Verfahren nach mindestens einem der vorangehenden Ansprüche, wobei zur Anpassung der funktionellen Eigenschaften der einzelnen Schichten den Dispersionen oder Lösungen wahlweise Porenbildner zur Erhöhung der Porosität, hydrophobe oder hydrophile Zusätze zur Einstellung des Benetzungsverhaltens, Stoffe zur Erhöhung der elektrischen Leitfähigkeit oder Zusätze zur Erhöhung der ionischen Leitfähigkeit oder Kombinationen hiervon zugesetzt werden.

8. Verfahren nach mindestens einem der vorangehenden Ansprüche, wobei für die Bildung der dichten Elektrolytschichten Ionomere oder Ionomerenblends eingesetzt werden.

9. Galvanisches Element, erhältlich nach einem Verfahren gemäß mindestens einem der Ansprüche 1 bis 8.

10. Stapel aus mehreren galvanischen Elementen gemäß Anspruch 9 in bipolarer Bauweise.

11. Flächiger Aufbau von mehreren galvanischen Elementen nach Anspruch 9 in serieller Schaltung auf einem Substrat.

## Claims

1. Process for the production of galvanic elements based on a layer composition of functional layers **characterized in that** successively the single layers of different functionality are applied as solutions or dispersions on a porous supporting substrate, whereby single layers of dispersions and/or solutions are applied by a printing process or spraying process.

2. Process according to claim 1, **characterized in that** a porous supporting substrate with a porosity of at least 70% is used.

3. Process according to claim 1 and/or 2, whereby a porous supporting substrate with a flexural stiffness of at least 35 MPa and an elastic modulus of at least 9000 MPa is used.

4. Process according to at least one of the precedent claims, whereby the supporting substrate is selected from electroconductive material, preferentially graphite paper.

5. Process according to at least one of the claims 1 to 3 whereby the supporting substrate is not electroconductive.

6. Process according to at least one of the preceding claims whereby as layers of different functionality a porous electrode layer, a dense electrolyte layer and again a porous electrode layer are applied successively onto a porous supporting layer.

7. Process according to at least one of the preceding claims whereby optionally pore builders to increase the porosity, hydrophobic or hydrophilic additives to adjust the wetting behaviour, additives to increase the electric conductivity or additives to increase the ionic conductivity or combinations thereof are added to the dispersions or solutions to adjust the functional properties of the discrete layers.

8. Process according to at least one of the preceding claims whereby ionomers or ionomer blends are used to form the dense electrolyte layer.

9. Galvanic element obtained by a process according to at least one of the claims 1 to 8.

10. Stack of several galvanic elements according to claim 9 in bipolar construction.

11. Plane assembly of several galvanic elements according to claim 9 in serial connections on a substrate.

## Revendications

1. Procédé de fabrication d'une structure à couches de cellules galvanisées avec des couches fonctionnelles, qui est **caractérisée par** un support à substrat poreux où est déposé successivement des couches à différentes caractéristiques venant de dispersion ou de solution qui sont, elles-mêmes, appliquées par pulvérisation ou par impression.

2. Procédé après la revendication 1, dans lequel un support à substrat poreux est utilisé avec une porosité ouverte d'au moins 70%.

3. Le procédé après les revendications 1 et/ou 2, par lequel un support à substrat poreux est utilisé avec une rigidité à la flexion d'au moins 35 MPa et un module d'élasticité d'au moins 9000 MPa.

4. Procédé après au moins l'une des revendications précédentes, dans lequel le substrat porteur est sélectionné à partir de matières électriquement conductrices, de préférence du papier graphite.

5. Procédé après l'une des revendications 1 à 3, dans laquelle le substrat porteur est électriquement non-conducteur.

6. Procédé après au moins l'une des revendications précédentes, dans lequel des couches de différentes fonctions sont déposés sur le substrat transporteur poreux comme successivement une couche d'électrodes poreuses, une couche électrolytique étanche à l'air et est à nouveau appliqué sur une couche d'électrodes poreuses.

7. Procédé après au moins une des revendications précédentes, **caractérisée en** ajustant les propriétés fonctionnelles des pores des différentes couches en dispersions ou en solutions pour augmenter la porosité, en ajustant des additifs hydrophiles ou hydrophobes pour modifier le comportement de mouillage, en ajustant des substances pour augmenter la conductivité électrique ou en ajustant des additifs pour augmenter la conductivité ionique ou leurs combinaisons.

8. Procédé après au moins l'une des revendications précédentes, dans lesquelles, pour la formation de couches denses électrolytiques sont utilisés des ionomères ou un mélange d'ionomères.

9. Une cellule galvanique obtenue par un procédé selon l'une des quelconques des revendications 1 à 8.

10. Empilage de plusieurs cellules galvaniques selon la revendication 9 dans une conception bipolaire.

11. Structure plate de plusieurs cellules galvaniques selon la revendication 9 couplées en série sur un même plan et sur un substrat.
